(19) Europäisches Patentamt
European Patent Office
Office européen des brevets

(11) **EP 4 431 769 B1**

(12) **EUROPEAN PATENT SPECIFICATION**

(45) Date of publication and mention
of the grant of the patent:
**29.07.2026 Bulletin 2026/31**

(21) Application number: **22902726.3**

(22) Date of filing: **17.05.2022**

(51) International Patent Classification (IPC):
*F16K 11/085* (2006.01)      *F16K 27/06* (2006.01)
*F16K 31/04* (2006.01)      *F16K 31/53* (2006.01)

(52) Cooperative Patent Classification (CPC):
**F16K 11/0856; F16K 27/065; F16K 31/041;
F16K 31/535**

(86) International application number:
**PCT/CN2022/093314**

(87) International publication number:
**WO 2023/103288 (15.06.2023 Gazette 2023/24)**

(54) **FIVE-WAY VALVE**

FÜNF-WEGE-VENTIL

SOUPAPE À CINQ VOIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **10.12.2021   CN 202111511104
10.12.2021   CN 202123098867 U**

(43) Date of publication of application:
**18.09.2024   Bulletin 2024/38**

(73) Proprietor: **Zhejiang Dunan Artificial Environment
Co., Ltd.
Shaoxing, Zhejiang 311835 (CN)**

(72) Inventors:
• **FENG, Zhongbo**
**Shaoxing, Zhejiang 311835 (CN)**
• **WANG, Junjie**
**Shaoxing, Zhejiang 311835 (CN)**
• **SHA, Haijian**
**Shaoxing, Zhejiang 311835 (CN)**
• **WANG, Fugang**
**Shaoxing, Zhejiang 311835 (CN)**

(74) Representative: **V.O.**
**P.O. Box 87930
2508 DH Den Haag (NL)**

(56) References cited:
WO-A1-2021/122056     CN-A- 104 197 089
CN-A- 107 355 442     CN-A- 111 828 682
CN-U- 207 661 179     JP-A- H07 174 247
US-A- 3 882 883     US-A1- 2017 159 680
US-A1- 2021 131 575

# Description

## Cross-Reference to Related Application

The present disclosure is a national stage application of International Patent Application No. PCT/CN2022/093314, which is filed on May 17, 2022. The International Patent Application claims the priority of Chinese Application No. 202111511104.5, filed in the Chinese Patent Office on December 10, 2021, and entitled "Five-Way Valve" and claims the priority of Chinese Application No. 202123098867.X, filed in the Chinese Patent Office on December 10, 2021, and entitled " Five-Way Valve".

## Technical Field

The present disclosure relates to the technical field of five-way valves, specifically to a five-way valve.

## Background

Currently, for multi-way valves in a prior art, a plurality of motors and valve cores are required to achieve the switching between multiple working conditions. Taking a five-way valve as an example, the five-way valve in the prior art usually uses two valve cores and two motors, and the two motors respectively drive the two valve cores to rotate. The switching between multiple working conditions of the five-way valve and the flow rate adjustment can be achieved by rotation of the valve core.

The five-way valve in the prior art requires two valve cores and two motors to achieve working condition switching and flow rate adjusting functions, there are more structures, the production and manufacturing difficulty is higher, the mounting accuracy is difficult to ensure during a mounting process, and the cost is high.

A control valve according to the preamble of claim 1 is disclosed in CN 111828682 A.

## Summary

Some embodiments of the present disclosure provide a five-way valve to solve the problem of high manufacturing cost of five-way valves in the prior art.

In order to solve the above problem, some embodiments of the present disclosure provide a five-way valve, including: a main body portion, the main body portion having a valve cavity, a first inlet, a second inlet, a first outlet, a second outlet, a third outlet, and a fourth outlet; a valve core rotatably arranged in the valve cavity, the valve core having a first cavity, a second cavity, a third cavity, and a fourth cavity which are separated; and a single-motor actuator, the single-motor actuator being in driving connection with the valve core, wherein the five-way valve can be switched to any one of the following working conditions by means of rotation of the valve core: a first working condition: the first inlet is communicated with the first outlet through the first cavity, the second inlet is communicated with the third outlet through the third cavity, and the second outlet and the fourth outlet are disconnected; a second working condition: the first inlet is communicated with the first outlet through the first cavity, the second inlet is communicated with both the third outlet and the fourth outlet through the third cavity, and the second outlet is disconnected; a third working condition: the first inlet is communicated with the first outlet through the first cavity, the second inlet is communicated with the fourth outlet through the third cavity, and both the third outlet and the second outlet are disconnected; a fourth working condition: the second inlet is communicated with the second outlet through the second cavity, the first inlet is communicated with the third outlet through the fourth cavity, and both the first outlet and the fourth outlet are disconnected; a fifth working condition: the second inlet is communicated with the second outlet through the second cavity, the first inlet is communicated with both the third outlet and the fourth outlet through the fourth cavity, and the first outlet is disconnected; and a sixth working condition: the second inlet is communicated with the second outlet through the second cavity, the first inlet is communicated with the fourth outlet through the fourth cavity, and the first outlet and the third outlet are disconnected, wherein, in the second working condition, the single-motor actuator is configured to drive the valve core to rotate and maintain at multiple different positions to adjust a proportion of fluids output from the third outlet and the fourth outlet; and in the fifth working condition, the single-motor actuator is configured to drive the valve core to rotate and maintain at multiple different positions to adjust a proportion of fluids output from the third outlet and the fourth outlet.

Further, the valve core includes a first axial region, a second axial region, and a third axial region which are sequentially arranged in an axial direction, and openings of the first cavity, the second cavity, the third cavity, and the fourth cavity all face an inner wall of the valve cavity; and the first cavity includes a first-first main cavity and a first-second main cavity which are communicated with each other, the third cavity includes a third-first main cavity and a third-second main cavity which are communicated with each other, the second cavity includes a second-first main cavity and a second-second main cavity which are communicated with each other, and the fourth cavity includes a fourth-first main cavity and a fourth-second main cavity which are communicated with each other, wherein the first-first main cavity and the second-first main cavity are both located in the first axial region, the first-second main cavity, the third-first main cavity, the fourth-first main cavity, and the second-second main cavity are all located in the second axial region, and the third-second main cavity and the fourth-second main cavity are both arranged in the third axial region.

Further, the valve core includes a first fan-shaped region, a second fan-shaped region, a third fan-shaped region, a fourth fan-shaped region, a fifth fan-shaped region, a sixth fan-shaped region, a seventh fan-shaped region, and an eighth fan-shaped region which are sequentially arranged in a circumferential direction, wherein the first-first main cavity is distributed in the first fan-shaped region and the second fan-shaped region, the first-second main cavity is distributed in the first fan-shaped region and the second fan-shaped region, the third-first main cavity is distributed in the third fan-shaped region and the fourth fan-shaped region, the third-second main cavity is distributed in the second fan-shaped region and the third fan-shaped region, the second-first main cavity is distributed in the seventh fan-shaped region and the eighth fan-shaped region, the second-second main cavity is distributed in the seventh fan-shaped region and the eighth fan-shaped region, the fourth-first main cavity is distributed in the fifth fan-shaped region and the sixth fan-shaped region, and the fourth-second main cavity is distributed in the sixth fan-shaped region and the seventh fan-shaped region.

Further, in the axial direction of the valve core, lengths of the first axial region, the second axial region, and the third axial region are equal; and in the circumferential direction of the valve core, radians of the first fan-shaped region, the second fan-shaped region, the third fan-shaped region, the fourth fan-shaped region, the fifth fan-shaped region, the sixth fan-shaped region, the seventh fan-shaped region, and the eighth fan-shaped region are equal.

Further, in a circumferential direction of the valve core, opening angles of the third outlet and the fourth outlet are both H1, a spacing angle between the third outlet and the fourth outlet is H2, and opening angles of the third-second main cavity and the fourth-second main cavity are both H3, wherein H1<H2<H3.

Further, the valve core includes a shaft sleeve, two circular end plates, a plurality of axial partition plates, and a plurality of fan-shaped partition plates, the two circular end plates are arranged in parallel and are both fixedly connected with the shaft sleeve, and the two circular end plates and the shaft sleeve are both coaxially arranged, wherein the plurality of axial partition plates and the plurality of fan-shaped partition plates are distributed in a space between the two circular end plates to divide the space between the two circular end plates into the first cavity, the second cavity, the third cavity, and the fourth cavity, and the single-motor actuator is in driving connection with the shaft sleeve.

Further, each of the plurality of axial partition plates and each of the plurality of fan-shaped partition plates are both connected with the shaft sleeve, and the each of the plurality of fan-shaped partition plates is connected with at least two axial partition plates in the plurality of axial partition plates; the third-second main cavity includes a first sub-cavity and a second sub-cavity which are communicated with each other, the fourth-second main cavity includes a third sub-cavity and a fourth sub-cavity which are communicated with each other, and the valve core further includes a first arc-shaped plate and a second arc-shaped plate; in the circumferential direction of the valve core, the first arc-shaped plate, the first sub-cavity, the second sub-cavity, the second arc-shaped plate, the third sub-cavity, and the fourth sub-cavity are sequentially arranged; in the first working condition, the first sub-cavity is connected to the third outlet, and the second arc-shaped plate blocks the fourth outlet; in the third working condition, the second sub-cavity is connected to the fourth outlet, and the first arc-shaped plate blocks the third outlet; in the fourth working condition, the third sub-cavity is connected to the third outlet, and the first arc-shaped plate blocks the fourth outlet; and in the sixth working condition, the fourth sub-cavity is connected to the fourth outlet, and the second arc-shaped plate blocks the third outlet.

Further, a bottom wall of the valve cavity is provided with an arc-shaped groove, the arc-shaped groove is arranged around an axis of the valve core, the five-way valve further includes a limiting block, the limiting block is located on a side of the valve core facing the bottom wall of the valve cavity, and the limiting block is located in the arc-shaped groove.

Further, the arc-shaped groove has a first arc-shaped wall, a second arc-shaped wall, a first end wall, and a second end wall, the limiting block has a fan-shaped structure, and the limiting block has a third arc-shaped wall, a fourth arc-shaped wall, a third end wall, and a fourth end wall, wherein the first arc-shaped wall is matched with the third arc-shaped wall, the second arc-shaped wall is matched with the fourth arc-shaped wall, the first end wall is in stop fit with the third end wall, and the second end wall is in stop fit with the fourth end wall.

Further, the valve core has a first setting position and a second setting position; in a case that the valve core is located in the first setting position, the five-way valve is in the first working condition, and the first end wall is separated from the third end wall; in a case that the valve core is located in the second setting position, the five-way valve is in the sixth working condition, and the second end wall is separated from the fourth end wall; and in a case that the five-way valve is switched from the first working condition to the sixth working condition along a rotation direction, a rotation angle of the valve core is N, and a range of a rotation angle of the limiting block in the arc-shaped groove is greater than N.

Further, the valve core has a first setting position; in a case that the valve core is located in the first setting position, the five-way valve is in the first working condition, and the valve core has a reserved rotation angle M; in a case that the valve core rotates in a range of the rotation angle M along a rotation direction from the first setting position, the five-way valve is maintained in the first working condition; and in a case that the valve core rotates in a range greater than the rotation angle M along the rotation direction from the first setting position, the five-way valve is switched to other working conditions.

Further, the main body portion includes a valve body and a sealing gasket, the valve body has the valve cavity, the sealing gasket is arranged in the valve cavity, and the first inlet, the second inlet, the first outlet, the second outlet, the third outlet, and the fourth outlet are all arranged in the sealing gasket, wherein the first outlet, the first inlet, and the third outlet are arranged along an axial direction of the valve core, the second outlet, the second inlet, and the fourth outlet are arranged along the axial direction of the valve core, the first outlet and the second outlet are arranged along the circumferential direction of the valve core, the first inlet and the second inlet are arranged along the circumferential direction of the valve core, and the third outlet and the fourth outlet are arranged along the circumferential direction of the valve core.

Further, the sealing gasket has an arc-shaped structure, an outer side of the sealing gasket is attached to an inner wall of the valve cavity, an inner side of the sealing gasket is attached to an outer circumferential surface of the valve core, the main body portion further includes two arc-shaped baffle plates arranged on the inner wall of the valve cavity, and the two arc-shaped baffle plates respectively abut against two ends of the sealing gasket in a circumferential direction; and on a side of the sealing gasket facing the inner wall of the valve cavity, the sealing gasket is distributed with a plurality of sealing ribs in the axial direction and the circumferential direction.

Further, the valve body includes a base, a cylinder, and a plurality of reinforcing ribs, the cylinder is connected with the base, each of the plurality of reinforcing ribs is connected with both the base and an outer wall of the cylinder, the cylinder has the valve cavity, the base has six flow channels, and the six flow channels are respectively communicated with the first inlet, the second inlet, the first outlet, the second outlet, the third outlet, and the fourth outlet.

Further, the main body portion further includes a valve cover and a sealing ring, the valve cover is in sealed connection with the valve body, the valve cover blocks an opening of the valve cavity, the sealing ring is arranged in a groove of the valve cover, the five-way valve further includes a rotating shaft, a portion of the rotating shaft is fixed in the valve core, the rotating shaft passes through the sealing ring, and an output shaft of the single-motor actuator is in driving connection with the rotating shaft.

Further, the single-motor actuator includes a housing and a motor, a gear assembly, and a control plate which are arranged in the housing, the motor is in driving connection with an input shaft of the gear assembly, an output shaft of the gear assembly is in driving connection with the valve core, and the housing is fixedly connected with the main body portion.

The technical solution of the present disclosure provides a five-way valve, including: a main body portion, the main body portion having a valve cavity, a first inlet, a second inlet, a first outlet, a second outlet, a third outlet, and a fourth outlet; a valve core rotatably arranged in the valve cavity, the valve core having a first cavity, a second cavity, a third cavity, and a fourth cavity which are separated; and a single-motor actuator, the single-motor actuator being in driving connection with the valve core, wherein the five-way valve can be switched to any one of the following working conditions by means of rotation of the valve core: a first working condition: the first inlet is communicated with the first outlet through the first cavity, the second inlet is communicated with the third outlet through the third cavity, and the second outlet and the fourth outlet are disconnected; a second working condition: the first inlet is communicated with the first outlet through the first cavity, the second inlet is communicated with both the third outlet and the fourth outlet through the third cavity, and the second outlet is disconnected; a third working condition: the first inlet is communicated with the first outlet through the first cavity, the second inlet is communicated with the fourth outlet through the third cavity, and the third outlet and the second outlet are disconnected; a fourth working condition: the second inlet is communicated with the second outlet through the second cavity, the first inlet is communicated with the third outlet through the fourth cavity, and the first outlet and the fourth outlet are disconnected; a fifth working condition: the second inlet is communicated with the second outlet through the second cavity, the first inlet is communicated with both the third outlet and the fourth outlet through the fourth cavity, and the first outlet is disconnected; and a sixth working condition: the second inlet is communicated with the second outlet through the second cavity, the first inlet is communicated with the fourth outlet through the fourth cavity, and the first outlet and the third outlet are disconnected. By means of this solution, the switching between multiple working conditions of the five-way valve can be achieved by using one single-motor actuator to drive one valve core to rotate. Compared with the situation in the prior art that the switching between working conditions of the five-way valve can be achieved only by using two motors to respectively drive two valve cores, this solution of the present disclosure reduces a set of single-motor actuator and valve core, thereby reducing the production and manufacturing difficulty of the five-way valve, improving the mounting accuracy of the overall structure of the five-way valve, and reducing the manufacturing cost of the five-way valve.

## Brief Description of the Drawings

The accompanying drawings of the specification, constituting a part of the present disclosure, are used for providing a further understanding for the present disclosure. Exemplary embodiments of the present disclosure and descriptions thereof are used for explaining the present disclosure, but do not constitute any improper limitation on the present disclosure. In the accompanying drawings:

Fig. 1 shows a schematic structural view of a five-way valve provided in an embodiment of the present disclosure;

Fig. 2 shows an exploded view of the five-way valve in Fig. 1;

Fig. 3 shows an exploded view of partial structures in the five-way valve in Fig. 1;

Fig. 4 shows a schematic structural view of a valve body of the five-way valve in Fig. 1;

Fig. 5 shows a bottom view of the five-way valve in Fig. 1;

Fig. 6 shows a schematic structural view of a valve core of the five-way valve in Fig. 1;

Fig. 7 shows a schematic structural view of the valve core in Fig. 6 from another perspective;

Fig. 8 shows a circumferentially expanded schematic view of the valve core in Fig. 6;

Fig. 9 shows a region division schematic view of the valve core in Fig. 8;

Fig. 10 shows a schematic structural view of a sealing gasket of the five-way valve in Fig. 1;

Fig. 11 shows a cross-sectional view of the sealing gasket in Fig. 8;

Fig. 12 shows a side view of a main body portion and the valve core of the five-way valve in Fig. 1;

Fig. 13 shows a cross-sectional view of a position D-D in Fig. 12;

Fig. 14 shows a cross-sectional view of a position E-E in Fig. 12;

Fig. 15 shows a cross-sectional view of a position F-F in Fig. 12;

Fig. 16 shows a cross-sectional view of a position G-G in Fig. 12; and

Fig. 17 shows a schematic structural view of a single-motor actuator of the five-way valve in Fig. 1.

The above accompanying drawings have the following reference numerals:

10. main body portion; 111. second outlet; 112. first outlet; 113. first inlet; 114. second inlet; 115. third outlet; 116. fourth outlet; 12. valve cavity; 13. arc-shaped groove; 14. valve body; 141. base; 142. cylinder; 143. reinforcing rib; 144. metal sleeve; 15. sealing gasket; 16. arc-shaped baffle plate; 17. valve cover; 18. sealing ring; 19. flat washer;

20. valve core; 21. first cavity; 211. first-first main cavity; 212. first-second main cavity; 22. second cavity; 221. second-first main cavity; 222. second-second main cavity; 23. third cavity; 231. third-first main cavity; 232. third-second main cavity; 24. fourth cavity; 241. fourth-first main cavity; 242. fourth-second main cavity; 251. first axial region; 252. second axial region; 253. third axial region; 261. first fan-shaped region; 262. second fan-shaped region; 263. third fan-shaped region; 264. fourth fan-shaped region; 265. fifth fan-shaped region; 266. sixth fan-shaped region; 267. seventh fan-shaped region; 268. eighth fan-shaped region; 271. shaft sleeve; 272. circular end plate; 273. axial partition plate; 274. fan-shaped partition plate; 281. first arc-shaped plate; 282. second arc-shaped plate;

30. single-motor actuator; 31. housing; 32. motor; 33. gear assembly; 34. control plate;

40. limiting block;

50. rotating shaft;

C2. first sub-cavity; C3. second sub-cavity; C6. third sub-cavity; C7. fourth sub-cavity.

## Detailed Description of the Embodiments

The technical solutions in the embodiments of the present disclosure are clearly and completely described below with reference to the accompanying drawings in the embodiments of the present disclosure. Apparently, the described embodiments are only some embodiments rather than all the embodiments of the present disclosure. The following description of at least one exemplary embodiment is actually only illustrative, and does not constitute any limitation on the present disclosure and the application or use of the present disclosure. All other embodiments obtained by those of ordinary skill in the art based on the embodiments in the present disclosure without creative efforts shall fall within the protection scope of the present disclosure.

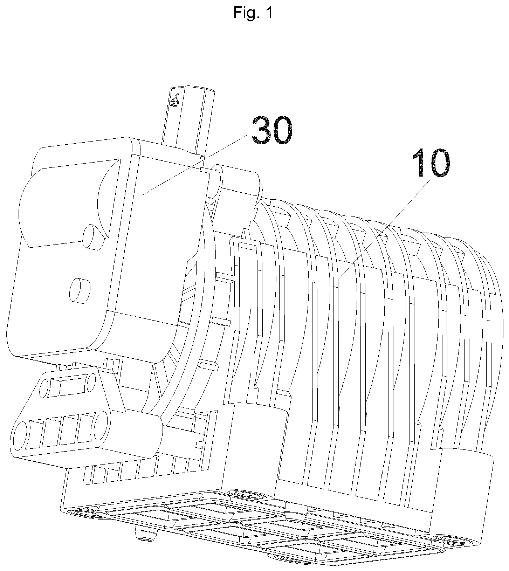

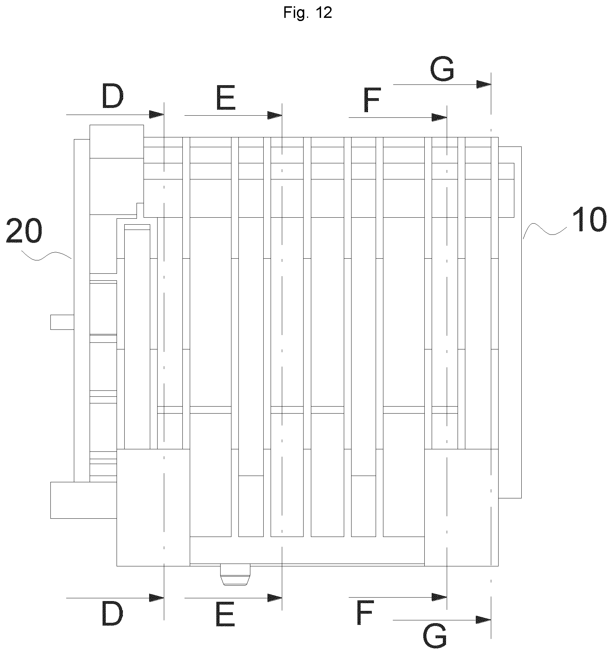

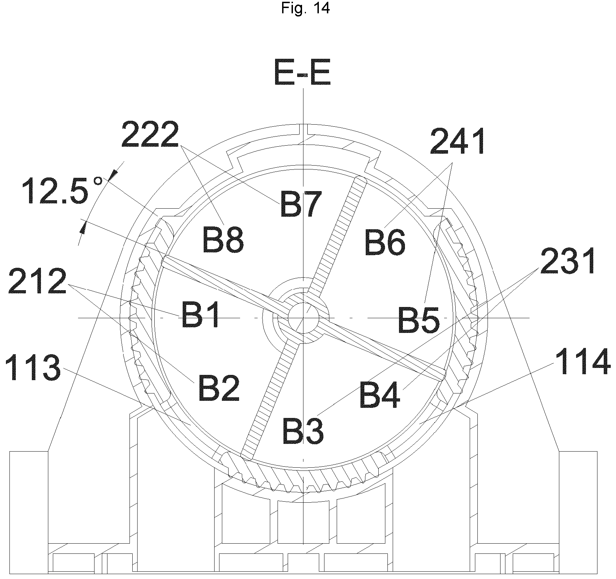

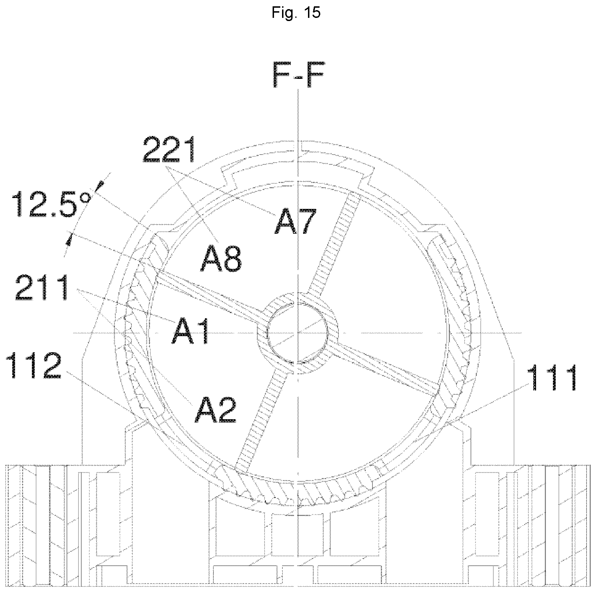

As shown in Fig. 1 to Fig. 17, an embodiment of the present disclosure provides a five-way valve, including: a main body portion 10, the main body portion 10 has a valve cavity 12, a first inlet 113, a second inlet 114, a first outlet 112, a second outlet 111, a third outlet 115, and a fourth outlet 116; a valve core 20 rotatably arranged in the valve cavity 12, the valve core 20 has a first cavity 21, a second cavity 22, a third cavity 23, and a fourth cavity 24 which are separated; and a single-motor actuator 30, the single-motor actuator 30 is in driving connection with the valve core 20, wherein the five-way valve can be switched to any one of the following working conditions by means of rotation of the valve core 20: a first working condition: the first inlet 113 is communicated with the first outlet 112 through the first cavity 21, the second inlet 114 is communicated with the third outlet 115 through the third cavity 23, and the second outlet 111 and the fourth outlet 116 are disconnected; a second working condition: the first inlet 113 is communicated with the first outlet 112 through the first cavity 21, the second inlet 114 is communicated with both the third outlet 115 and the fourth outlet 116 through the third cavity 23, and the second outlet 111 is disconnected; a third working condition: the first inlet 113 is communicated with the first outlet 112 through the first cavity 21, the second inlet 114 is communicated with the fourth outlet 116 through the third cavity 23, and the third outlet 115 and the second outlet 111 are disconnected; a fourth working condition: the second inlet 114 is communicated with the second outlet 111 through the second cavity 22, the first inlet 113 is communicated with the third outlet 115 through the fourth cavity 24, and the first outlet 112 and the fourth outlet 116 are disconnected; a fifth working condition: the second inlet 114 is communicated with the second outlet 111 through the second cavity 22, the first inlet 113 is communicated with both the third outlet 115 and the fourth outlet 116 through the fourth cavity 24, and the first outlet 112 is disconnected; and a sixth working condition: the second inlet 114 is communicated with the second outlet 111 through the second cavity 22, the first inlet 113 is communicated with the fourth outlet 116 through the fourth cavity 24, and the first outlet 112 and the third outlet 115 are disconnected.

In this embodiment, the switching between multiple working conditions of the five-way valve can be achieved by using one single-motor actuator 30 to drive one valve core 20 to rotate. Compared with the situation in a prior art that the switching between working conditions of the five-way valve can be achieved only by using two motors to respectively drive two valve cores 20, this solution reduces a set of motor and valve core 20, thereby reducing the production and manufacturing difficulty of the five-way valve, improving a mounting accuracy of the overall structure of the five-way valve, and reducing a manufacturing cost of the five-way valve.

Specifically, in the second working condition, the single-motor actuator 30 is able to drive the valve core 20 to rotate and maintain at multiple different positions to adjust the proportion of fluids output from the third outlet 115 and the fourth outlet 116; and in the fifth working condition, the single-motor actuator 30 is able to drive the valve core 20 to rotate and maintain at multiple different positions to adjust the proportion of fluids output from the third outlet 115 and the fourth outlet 116.

In this embodiment, a flow rate of the outlet of the five-way valve in the second working condition and the fifth working condition is adjusted by using one single-motor actuator 30 to drive one valve core 20 to rotate.

Compared with the situation in the prior art that the adjustment of the flow rate of the outlet of the five-way valve is achieved by using two motors to respectively drive two valve cores 20 to rotate, this solution reduces a set of motor and valve core 20, thereby reducing the production and manufacturing difficulty and manufacturing cost of the five-way valve.

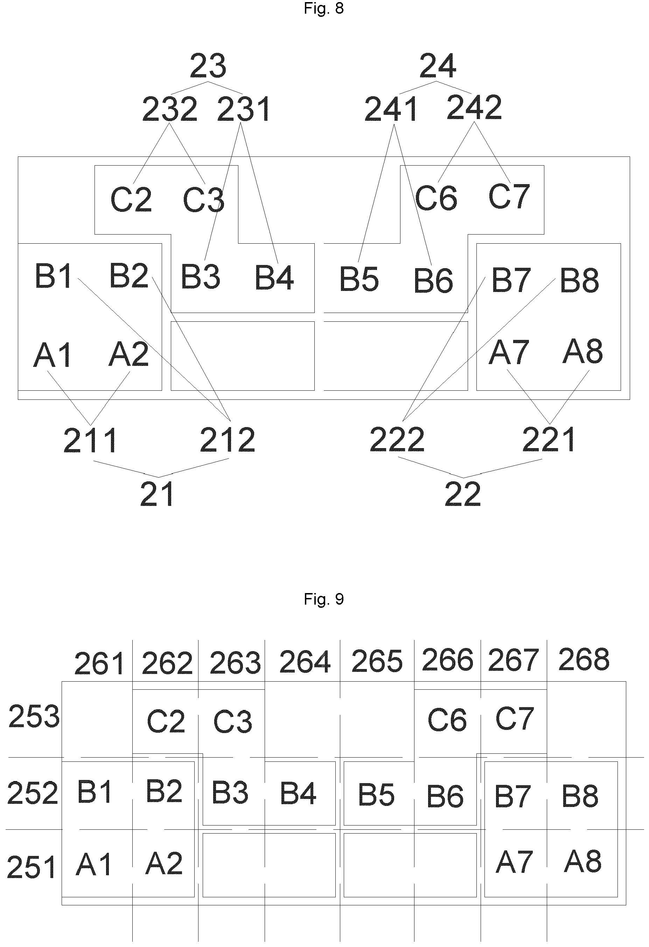

As shown in Fig. 8 and Fig. 9, the valve core 20 includes a first axial region 251, a second axial region 252, and a third axial region 253 which are sequentially arranged in an axial direction, and openings of the first cavity 21, the second cavity 22, the third cavity 23, and the fourth cavity 24 all face an inner wall of the valve cavity 12; and the first cavity 21 includes a first-first main cavity 211 and a first-second main cavity 212 which are communicated with each other, the third cavity 23 includes a third-first main cavity 231 and a third-second main cavity 232 which are communicated with each other, the second cavity 22 includes a second-first main cavity 221 and a second-second main cavity 222 which are communicated with each other, and the fourth cavity 24 includes a fourth-first main cavity 241 and a fourth-second main cavity 242 which are communicated with each other, wherein the first-first main cavity 211 and the second-first main cavity 221 are both located in the first axial region 251, the first-second main cavity 212, the third-first main cavity 231, the fourth-first main cavity 241, and the second-second main cavity 222 are all located in the second axial region 252, and the third-second main cavity 232 and the fourth-second main cavity 242 are both arranged in the third axial region 253.

In this embodiment, a plurality of cavities for achieving a flow rate adjusting function and a working condition switching function of the five-way valve are arranged on the same valve core 20, that is, the valve core 20 is divided into three layers: the first axial region 251, the second axial region 252, and the third axial region 253, and the plurality of cavities with circulation relationships, namely the first cavity 21, the second cavity 22, the third cavity 23, and the fourth cavity 24, are limited on the first axial region 251, the second axial region 252, and the third axial region 253. By this arrangement, two communication segments which are communicated with each other in each cavity can be separated in the axial direction, and the communication between different cavities and different inlets and outlets can be achieved by means of rotation of the valve core 20, thereby achieving the purposes of working condition switching and flow rate adjustment. Compared with the situation in the prior art that the flow rate adjustment and working condition switching of the five-way valve can be achieved by means of rotation of two valve cores, this embodiment of the present disclosure combines the functions of two valve cores to form a new valve core 20, thereby reducing the production cost of the five-way valve.

As shown in Fig. 8 and Fig. 9, the valve core 20 includes a first fan-shaped region 261, a second fan-shaped region 262, a third fan-shaped region 263, a fourth fan-shaped region 264, a fifth fan-shaped region 265, a sixth fan-shaped region 266, a seventh fan-shaped region 267, and an eighth fan-shaped region 268 which are sequentially arranged in a circumferential direction, wherein the first-first main cavity 211 is distributed in the first fan-shaped region 261 and the second fan-shaped region 262, the first-second main cavity 212 is distributed in the first fan-shaped region 261 and the second fan-shaped region 262, the third-first main cavity 231 is distributed in the third fan-shaped region 263 and the fourth fan-shaped region 264, the third-second main cavity 232 is distributed in the second fan-shaped region 262 and the third fan-shaped region 263, the second-first main cavity 221 is distributed in the seventh fan-shaped region 267 and the eighth fan-shaped region 268, the second-second main cavity 222 is distributed in the seventh fan-shaped region 267 and the eighth fan-shaped region 268, the fourth-first main cavity 241 is distributed in the fifth fan-shaped region 265 and the sixth fan-shaped region 266, and the fourth-second main cavity 242 is distributed in the sixth fan-shaped region 266 and the seventh fan-shaped region 267.

In this embodiment, a plurality of cavities for achieving a flow rate adjusting function and a working condition switching function of the five-way valve are arranged on the same valve core 20, that is, the valve core 20 is divided into eight columns: the first fan-shaped region 261, the second fan-shaped region 262, the third fan-shaped region 263, the fourth fan-shaped region 264, the fifth fan-shaped region 265, the sixth fan-shaped region 266, the seventh fan-shaped region 267, and the eighth fan-shaped region 268, and the plurality of cavities with circulation relationships are limited in the plurality of fan-shaped regions. By this arrangement, two communication segments which are communicated with each other in each cavity can be separated in the radial direction, and the communication between different cavities and different inlets and outlets can be achieved by means of rotation of the valve core 20, thereby achieving the purposes of working condition switching and flow rate adjustment. Compared with the situation in the prior art that the function of the five-way valve can be achieved by means of rotation of two valve cores, this embodiment combines the functions of two valve cores to form a new valve core 20, thereby reducing the production cost of the five-way valve.

In some embodiments, in the axial direction of the valve core 20, the lengths of the first axial region 251, the second axial region 252, and the third axial region 253 are equal; and in the circumferential direction of the valve core 20, the radians of the first fan-shaped region 261, the second fan-shaped region 262, the third fan-shaped region 263, the fourth fan-shaped region 264, the fifth fan-shaped region 265, the sixth fan-shaped region 266, the seventh fan-shaped region 267, and the eighth fan-shaped region 268 are equal.

In an embodiment, by limiting the lengths of the first axial region 251, the second axial region 252, and the third axial region 253 to be equal, the communication areas between the cavity on each axial region and the inlet and outlet of the main body portion 10 are limited to be equal, thereby preventing the situation that the flow rates of the inlet and outlet of the five-way valve are different due to unequal communication areas between different axis regions and the inlet and outlet. By limiting the radians of the plurality of fan-shaped regions to be equal, the rotation angle of each fan-shaped region corresponding to the valve core 20 is ensured to be equal, thereby ensuring the rotation reliability of the valve core 20.

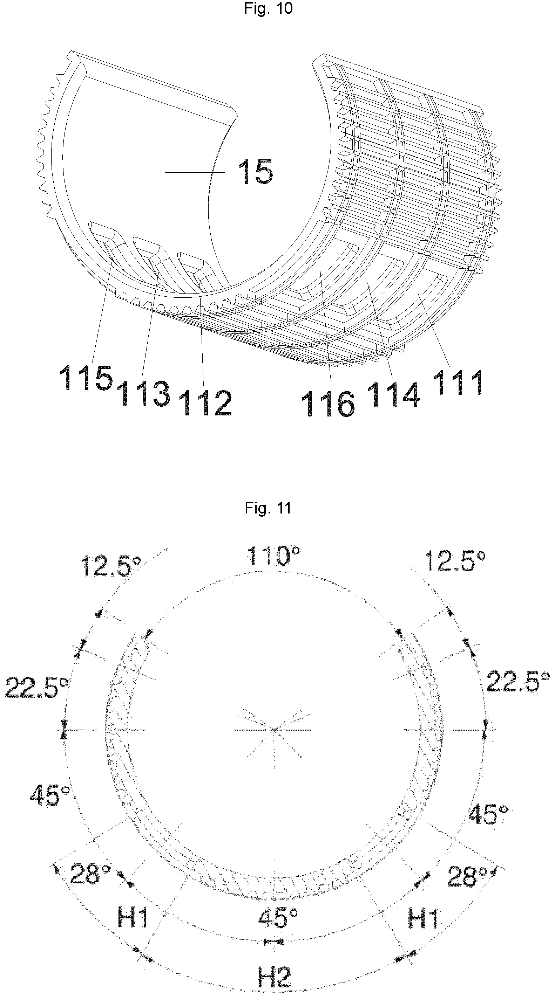

As shown in Fig. 11, in the circumferential direction of the valve core 20, the opening angles of the third outlet 115 and the fourth outlet 116 are both H1, the spacing angle between the third outlet 115 and the fourth outlet 116 is H2, and the opening angles of the third-second main cavity 232 and the fourth-second main cavity 242 are both H3, wherein H1<H2<H3. By this arrangement, because H3>H2, it can be ensured that when the valve core 20 rotates a certain angle, the third outlet 115 and the fourth outlet 116 can be communicated simultaneously to ensure the performance of the five-way valve.

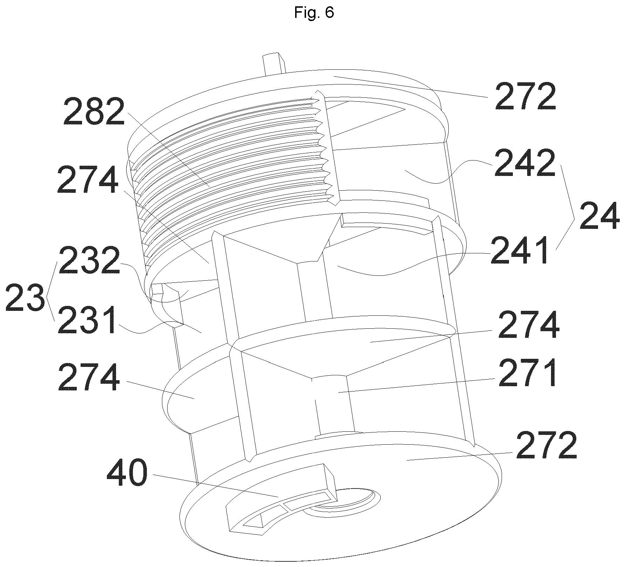

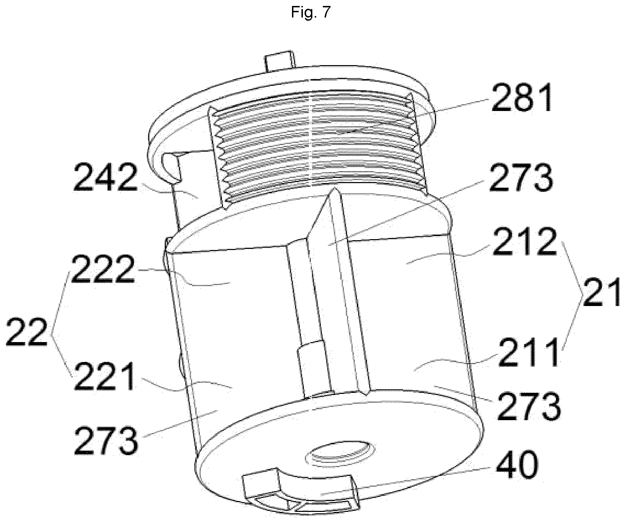

As shown in Fig. 6 and Fig. 7, the valve core 20 includes a shaft sleeve 271, two circular end plates 272, a plurality of axial partition plates 273, and a plurality of fan-shaped partition plates 274, the two circular end plates 272 are arranged in parallel and are both fixedly connected with the shaft sleeve 271, and the two circular end plates 272 and the shaft sleeve 271 are both coaxially arranged, wherein the plurality of axial partition plates 273 and the plurality of fan-shaped partition plates 274 are distributed in a space between the two circular end plates 272 to divide the space between the two circular end plates 272 into the first cavity 21, the second cavity 22, the third cavity 23, and the fourth cavity 24, and the single-motor actuator 30 is in driving connection with the shaft sleeve 271.

In an embodiment, the shaft sleeve 271 and the circular end plates 272 at two ends form a main body of the valve core 20, and then, an internal space of the main body of the valve core 20 is divided into the first cavity 21, the second cavity 22, the third cavity 23, and the fourth cavity 24 by the plurality of axial partition plates 273 and the plurality of fan-shaped partition plates 274 in the axial direction and the radial direction to form the valve core 20. By this arrangement, it can be ensured that main cavities which are communicated with each other in each cavity can be separated in both the axial direction and radial direction of the valve core 20, and the first cavity 21, the second cavity 22, the third cavity 23, and the fourth cavity 24 can also be separated in the axial direction and radial direction of the valve core 20, thereby ensuring the performance of the valve core 20.

In some embodiments, at least one circular end plate 272 is provided with ribs to increase the structural strength of the valve core 20.

In some embodiments, each axial partition plate 273 and each fan-shaped partition plate 274 are both connected with the shaft sleeve 271, and the each fan-shaped partition plate 274 is connected with at least two axial partition plates 273; the third-second main cavity 232 includes a first sub-cavity C2 and a second sub-cavity C3 which are communicated with each other, the fourth-second main cavity 242 includes a third sub-cavity C6 and a fourth sub-cavity C7 which are communicated with each other, and the valve core 20 further includes a first arc-shaped plate 281 and a second arc-shaped plate 282; in the circumferential direction of the valve core 20, the first arc-shaped plate 281, the first sub-cavity C2, the second sub-cavity C3, the second arc-shaped plate 282, the third sub-cavity C6, and the fourth sub-cavity C7 are sequentially arranged; in the first working condition, the first sub-cavity C2 is communicated with the third outlet 115, and the second arc-shaped plate 282 blocks the fourth outlet 116; in the third working condition, the second sub-cavity C3 is communicated with the fourth outlet 116, and the first arc-shaped plate 281 blocks the third outlet 115; in the fourth working condition, the third sub-cavity C6 is communicated with the third outlet 115, and the first arc-shaped plate 281 blocks the fourth outlet 116; and in the sixth working condition, the fourth sub-cavity C7 is communicated with the fourth outlet 116, and the second arc-shaped plate 282 blocks the third outlet 115. In this embodiment, the each axial partition plate 273 and the each fan-shaped partition plate 274 are both connected with the shaft sleeve 271, thereby facilitating the mounting and positioning of the axial partition plate 273 and the fan-shaped partition plate 274; and the each fan-shaped partition plate 274 is connected with at least two axial partition plates 273 to ensure the limiting and supporting of the fan-shaped partition plate 274, thereby ensuring the stability and reliability of the structure.

In some embodiments, a plurality of wave ribs extending along a circumferential direction are arranged on both the first arc-shaped plate 281 and the second arc-shaped plate 282, thereby improving the structural strength and sealing effect of the valve core 20; and the wave ribs are arranged along the circumferential direction, so that the rotary resistance of the valve core 20 is reduced.

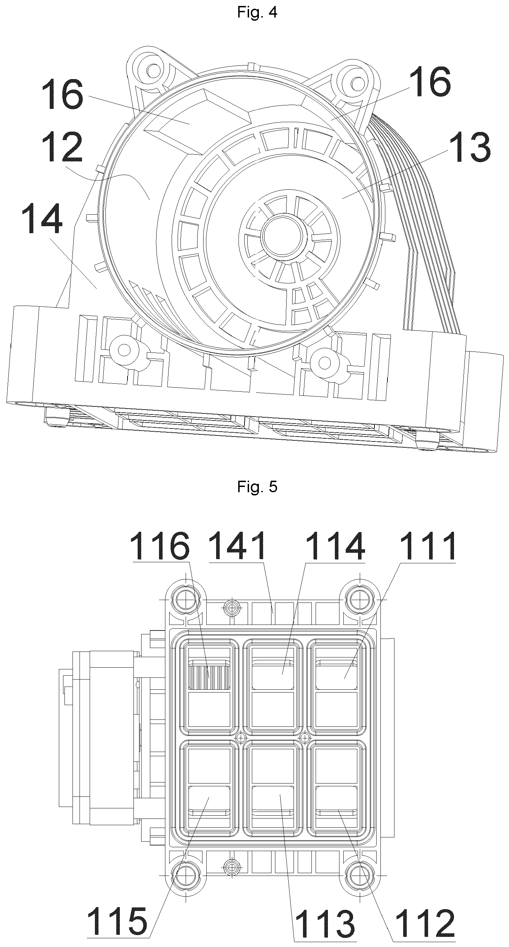

As shown in Fig. 4 to Fig. 7, a bottom wall of the valve cavity 12 is provided with an arc-shaped groove 13, the arc-shaped groove 13 is arranged around an axis of the valve core 20, the five-way valve further includes a limiting block 40, the limiting block 40 is located on a side of the valve core 20 facing the bottom wall of the valve cavity 12, and the limiting block 40 is located in the arc-shaped groove 13.

In some embodiments, the limiting block 40 and the valve core 20 are of an integrated structure and can be formed by injection molding, so that the cost can be reduced.

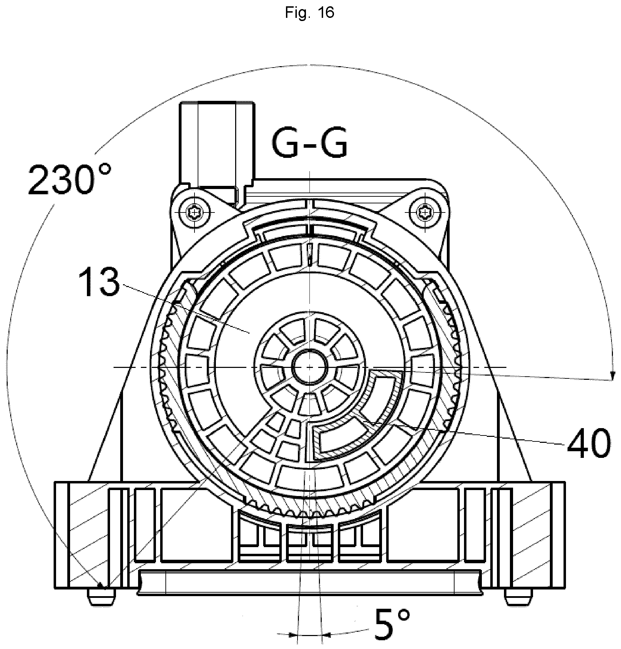

As shown in Fig. 16, the arc-shaped groove 13 has a first arc-shaped wall, a second arc-shaped wall, a first end wall, and a second end wall, the limiting block 40 has a fan-shaped structure, and the limiting block 40 has a third arc-shaped wall, a fourth arc-shaped wall, a third end wall, and a fourth end wall, wherein the first arc-shaped wall is matched with the third arc-shaped wall, the second arc-shaped wall is matched with the fourth arc-shaped wall, the first end wall is in stop fit with the third end wall, and the second end wall is in stop fit with the fourth end wall. By this arrangement, the limiting of rotation of the valve core 20 can be achieved by rotation of the limiting block 40 in the arc-shaped groove 13, thereby preventing the situation that the rotation angle of the valve core 20 is too large or the valve core 20 cannot be accurately reset during resetting.

In some embodiments, the valve core 20 is provided with a matching hole, the bottom wall of the valve cavity 12 is provided with a support shaft, and the support shaft penetrates into the matching hole. The support shaft and the valve body 14 are of an integrated structure.

In some embodiments, the valve core 20 has a first setting position and a second setting position; in a case that the valve core 20 is located in the first setting position, the five-way valve is in the first working condition, and the first end wall is separated from the third end wall; in a case that the valve core 20 is located in the second setting position, the five-way valve is in the sixth working condition, and the second end wall is separated from the fourth end wall; and in a case that the five-way valve is switched from the first working condition to the sixth working condition along a rotation direction, the rotation angle of the valve core 20 is N, and the range of the rotation angle of the limiting block 40 in the arc-shaped groove 13 is greater than N. This arrangement allows the range of the rotation angle of the limiting block 40 in the arc-shaped groove 13 to be greater than N, the rotation of the valve core 20 is limited by the limiting block 40 and the arc-shaped groove 13, and simultaneously, a maximum rotation range of the valve core 20 is not affected. That is, the rotation angle of the limiting block 40 in the arc-shaped groove 13 is greater than N, and the margin is located at two ends of the rotation angle N, thereby ensuring the reliability of rotation of the valve core 20 of the five-way valve.

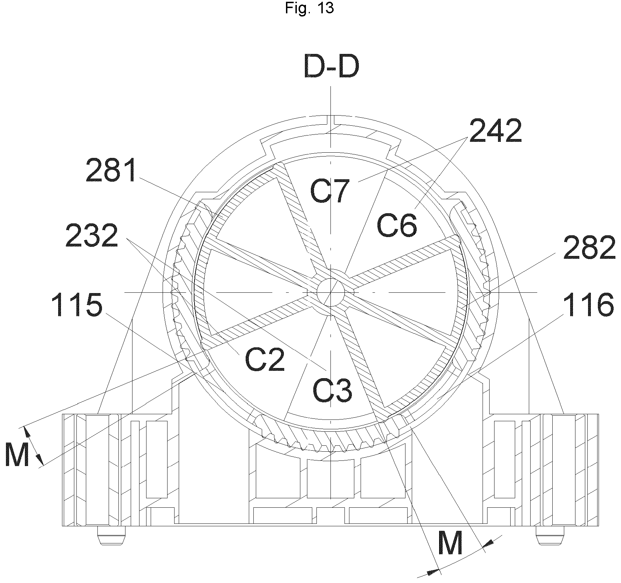

In some embodiments, the valve core 20 has a first setting position; in a case that the valve core 20 is located in the first setting position, the five-way valve is in the first working condition, and the valve core 20 has a reserved rotation angle M; in a case that the valve core 20 rotates in a range of the rotation angle M along the rotation direction from the first setting position, the five-way valve is maintained in the first working condition; and in a case that the valve core 20 rotates in a range greater than the rotation angle M along the rotation direction from the first setting position, the five-way valve is switched to other working conditions. As shown in Fig. 13, this arrangement can prevent the situation that when the valve core 20 is located in the first setting position, the valve core 20 rotates or has a mounting error so that a small part of the third outlet 115 is blocked by the first arc-shaped plate 281, and a small part of the fourth outlet 116 is opened by the second arc-shaped plate 282. Furthermore, this arrangement provides a sufficient rotation angle and rotation time required for switching the five-way valve from the first working condition to the second working condition, so that the five-way valve remains in the first working condition when the valve core 20 is in the reserved rotation angle M, a problem that the valve core 20 is affected and an inadequate rotation due to the sudden switching of the working condition is prevented.

In some embodiments, the main body portion 10 includes a valve body 14 and a sealing gasket 15, the valve body 14 has the valve cavity 12, the sealing gasket 15 is arranged in the valve cavity 12, and the first inlet 113, the second inlet 114, the first outlet 112, the second outlet 111, the third outlet 115, and the fourth outlet 116 are all arranged in the sealing gasket 15, wherein the first outlet 112, the first inlet 113, and the third outlet 115 are arranged along the axial direction of the valve core 20, the second outlet 111, the second inlet 114, and the fourth outlet 116 are arranged along the axial direction of the valve core 20, the first outlet 112 and the second outlet 111 are arranged along the circumferential direction of the valve core 20, the first inlet 113 and the second inlet 114 are arranged along the circumferential direction of the valve core 20, and the third outlet 115 and the fourth outlet 116 are arranged along the circumferential direction of the valve core 20.

Specifically, as shown in Fig. 11, an included angle between two ends of the sealing gasket 15 is 110°.

In an embodiment, as shown in Fig. 10 to Fig. 16, reserved rotation angles M=8.5°, N=225°, H1=28°, H2=62°, and H3=90°. In some embodiments, as shown in Fig. 13, an included angle between an end of the first arc-shaped plate 281 close to the third outlet 115 and a closer edge of the third outlet 115 is 8.5°, and an included angle between an end of the second arc-shaped plate 282 close to the fourth outlet 116 and a closer edge of the fourth outlet 116 is 8.5°. Specifically, the relationships between a plurality of main cavities and a plurality of cavities of the valve core 20 are shown in Fig. 8.

In some embodiments, as shown in Fig. 8, the first-first main cavity 211 includes a sub-cavity A1 and a sub-cavity A2 which are communicated with each other, the first-second main cavity 212 includes a sub-cavity B1 and a sub-cavity B2 which are communicated with each other, the third-first main cavity 231 includes a sub-cavity B3 and a sub-cavity B4 which are communicated with each other, the fourth-first main cavity 241 includes a sub-cavity B5 and a sub-cavity B6 which are communicated with each other, the second-first main cavity 221 includes a sub-cavity A7 and a sub-cavity A8 which are communicated with each other, and the second-second main cavity 222 includes a sub-cavity B7 and a sub-cavity B8 which are communicated with each other.

As shown in Fig. 11 to Fig. 16, the valve core 20

is located in the first setting position, and the rotation angle of the valve core 20 is 0°. At this time, the five-way valve is in the first working condition. At this time, the third-second main cavity 232 is communicated with the third outlet 115, the fourth outlet 116 is blocked by the second arc-shaped plate 282, the first-second main cavity 212 is communicated with the first inlet 113, the third-first main cavity 231 is communicated with the second inlet 114, the first-first main cavity 211 is communicated with the first outlet 112, the second outlet 111 is communicated with a closed cavity shown in Fig. 8 and is not communicated with other cavities, so that the second outlet 111 has no communication relationship, the third-second main cavity 232 is communicated with the third-first main cavity 231, and the first-second main cavity 212 is communicated with the first-first main cavity 211. Therefore, at this time, the second inlet 114 is communicated with the third outlet 115, and the first outlet 112 is communicated with the first inlet 113.

When the valve core 20 anticlockwise rotates 22.5° relative to the first setting position, that is, the valve core 20 rotates a reserved rotation angle M+H1/2, at this time, the five-way valve is in the second working condition, the first arc-shaped plate 281 blocks half of the third outlet 115, the second arc-shaped plate 282 on the other side also rotates this angle, half of the fourth outlet 116 is communicated with the third-second main cavity 232, and other communication relationships are not affected. At this time, the second inlet 114 is respectively communicated with the third outlet 115 and the fourth outlet 116, the proportion of the fluid entering the second inlet 114 is 100%, and the proportion of the fluids flowing out from the third outlet 115 and the fourth outlet 116 is 50% respectively. In this case, the proportion of the fluids flowing out from the third outlet 115 and the fourth outlet 116 can be adjusted by rotating the rotation angle of the valve core 20. Specifically, the flow rate adjusting range is the range of the rotation angle of the valve core 20, which is 8.5° to 36.5°. When the anticlockwise rotation angle of the valve core 20 is 8.5° to 22.5°, the proportion of the fluid flowing out from the third outlet 115 is greater than the proportion of the fluid flowing out from the fourth outlet 116. When the anticlockwise rotation angle of the valve core 20 is 22.5°, the fluid flowing out from the third outlet 115 is equal to the fluid flowing out from the fourth outlet 116. When the anticlockwise rotation angle of the valve core 20 is 22.5° to 36.5°, the proportion of the fluid flowing out from the third outlet 115 is less than the proportion of the fluid flowing out from the fourth outlet 116. When the anticlockwise rotation angle of the valve core 20 is 36.5°, the third outlet 115 is completely blocked by the first arc-shaped plate 281, and the second arc-shaped plate 282 completely avoids the fourth outlet 116; and at this time, the second inlet 114 is communicated with the fourth outlet 116, and other communication relationships remain unchanged.

When the valve core 20 anticlockwise rotates 45°, the five-way valve is in the third working condition, which is the same as the above situation when the valve core 20 anticlockwise rotates 36.5°, the third outlet 115 is completely blocked by the first arc-shaped plate 281, the second arc-shaped plate 282 completely avoids the fourth outlet 116, and other communication relationships remain unchanged; and at this time, the second inlet 114 is communicated with the fourth outlet 116, and the first outlet 112 is communicated with the first inlet 113.

When the valve core 20 anticlockwise rotates 180°, the five-way valve is in the fourth working condition. At this time, the fourth-second main cavity 242 is communicated with the third outlet 115, the fourth outlet 116 is blocked by the first arc-shaped plate 281, the fourth-first main cavity 241 is communicated with the first inlet 113, the second-second main cavity 222 is communicated with the second inlet 114, the second-first main cavity 221 is communicated with the second outlet 111, and the first outlet 112 is communicated with the closed cavity shown in Fig. 8 and is not communicated with other cavities so that the first outlet 112 has no communication relationship. Therefore, at this time, the first inlet 113 is communicated with the third outlet 115, and the second outlet 111 is communicated with the second inlet 114.

When the valve core 20 anticlockwise rotates 202.5°, the five-way valve is in the fifth working condition. At this time, with reference to Fig. 11, it can be seen that the second arc-shaped plate 282 blocks half of the third outlet 115, the first arc-shaped plate 281 on the other side communicates half of the fourth outlet 116 with the fourth-second main cavity 242, and other communication relationships are not affected. At this time, the first inlet 113 is respectively communicated with the third outlet 115 and the fourth outlet 116, the proportion of the fluid entering the first inlet 113 is 100%, and the proportion of the fluids flowing out from the third outlet 115 and the fourth outlet 116 is 50% respectively. In this case, the proportion of the fluids flowing out from the third outlet 115 and the fourth outlet 116 can be adjusted by rotating the rotation angle of the valve core 20. Specifically, the flow rate adjusting range is the range of the rotation angle of the valve core 20, which is 188.5° to 216.5°. When the anticlockwise rotation angle of the valve core 20 is 188.5° to 202.5°, the proportion of the fluid flowing out from the third outlet 115 is less than the proportion of the fluid flowing out from the fourth outlet 116. When the anticlockwise rotation angle of the valve core 20 is 202.5°, the proportion of the fluid flowing out from the third outlet 115 is equal to the proportion of the fluid flowing out from the fourth outlet 116. When the anticlockwise rotation angle of the valve core 20 is 202.5° to 216.5°, the proportion of the fluid flowing out from the third outlet 115 is greater than the proportion of the fluid flowing out from the fourth outlet 116. When the anticlockwise rotation angle of the valve core 20 is 216.5°, the second arc-shaped plate 282 completely blocks the third outlet 115, and the first arc-shaped plate 281 completely avoids the fourth outlet 116; and at this time, the first inlet 113 is communicated with the fourth outlet 116, and the second outlet 111 is communicated with the second inlet 114.

When the valve core 20 anticlockwise rotates 225°, the five-way valve is in the sixth working condition, which is the same as the above situation when the valve core 20 anticlockwise rotates 202.5°, the third outlet 115 is completely blocked by the second arc-shaped plate 282, the first arc-shaped plate 281 completely avoids the fourth outlet 116, and other communication relationships remain unchanged; and at this time, the first inlet 113 is communicated with the fourth outlet 116, and the second outlet 111 is communicated with the second inlet 114.

In some embodiments, as shown in Fig. 16, when the five-way valve is in the first working condition, the first end wall of the limiting block 40 is separated from the third end wall of the arc-shaped groove 13, a complementary angle is formed between the second end wall of the limiting block 40 and the fourth end wall of the arc-shaped groove 13, the complementary angle is 5°, and the rotation angle of the limiting block 40 in the arc-shaped groove 13 is 230°. The purpose of setting the complementary angle is to facilitate the positioning of the valve core 20 at an initial position. After the valve core 20 is mounted, first, the second end wall of the limiting block 40 on the valve core 20 can be attached to the fourth end wall of the arc-shaped groove 13, and then, the valve core 20 is integrally rotated by 5° to ensure the accuracy of the position of the valve core 20 in the first working condition. Simultaneously, the rotation angle of the valve core 20 required for switching the five-way valve from the first working condition to the sixth working condition is 225°. By setting the complementary angle which is 5°, after the valve core 20 rotates 225°, the second end wall of the limiting block 40 abuts against the fourth end wall of the arc-shaped groove 13 to limit the valve core 20, thereby preventing the valve core 20 from continuing to rotate. Furthermore, by this arrangement, after the valve core 20 rotates and resets every time, the valve core 20 is positioned again in the above manner of adjusting the initial position of the valve core 20 during mounting, thereby ensuring the reliability of the five-way valve.

In another embodiment, the complementary angle which is 5° may not be set. When the valve core 20 is located in the first setting position, that is, when the rotation angle of the valve core 20 is 0°, the second end wall of the limiting block 40 abuts against the fourth end wall of the arc-shaped groove 13. By this arrangement, the valve core 20 of the five-way valve can rotate to 230°, that is, N=230°, which facilitates the reset limiting of the position of the valve core 20 at the initial position.

Specifically, by different rotation angles of the valve core 20, the five-way valve also has multiple other communication working conditions which all play a four-way role and have no proportion adjusting relationship, so the working conditions are not listed one by one here.

As shown in Fig. 4 and Fig. 10, in some embodiments, the sealing gasket 15 has an arc-shaped structure, an outer side of the sealing gasket 15 is attached to an inner wall of the valve cavity 12, an inner side of the sealing gasket 15 is attached to an outer circumferential surface of the valve core 20, the main body portion 10 further includes two arc-shaped baffle plates 16 arranged on the inner wall of the valve cavity 12, and the two arc-shaped baffle plates 16 respectively abut against two ends of the sealing gasket 15 in the circumferential direction; and on a side of the sealing gasket 15 facing the inner wall of the valve cavity 12, the sealing gasket 15 is distributed with a plurality of sealing ribs in the axial direction and the circumferential direction. By this arrangement, the sealing gasket 15 is limited by the two arc-shaped baffle plates 16 to prevent the rotation of the sealing gasket 15 in the valve cavity 12, and the sealing gasket 15 is distributed with the plurality of sealing ribs in the axial direction and the circumferential direction, which can provide elastic margin supplementation for sealing, thereby improving the sealing reliability of the sealing gasket 15. In some embodiments, a spacing between the sealing ribs extending along the axial direction of the sealing gasket 15 is less than a spacing between the sealing ribs extending along the circumferential direction of the sealing gasket 15, thereby improving the sealing reliability.

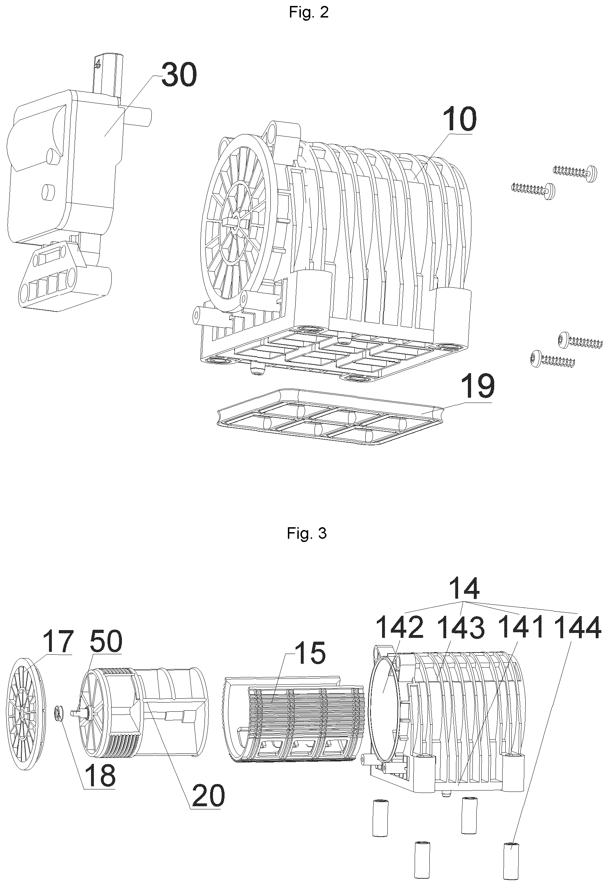

As shown in Fig. 3, in some embodiments, the valve body 14 includes a base 141, a cylinder 142, and a plurality of reinforcing ribs 143, the cylinder 142 is connected with the base 141, each reinforcing rib 143 is connected with both the base 141 and an outer wall of the cylinder 142, the cylinder 142 has the valve cavity 12, the base 141 has six flow channels, and the six flow channels are respectively communicated with the first inlet 113, the second inlet 114, the first outlet 112, the second outlet 111, the third outlet 115, and the fourth outlet 116. By this arrangement, the six flow channels are respectively communicated with the six inlets and outlets, so that external connecting pipes are respectively communicated with the six flow channels to achieve the communication between the exterior and the five-way valve. By the arrangement of the plurality of reinforcing ribs 143, an overall structural strength of the valve body 14 is improved. Furthermore, the sealing gasket 15 is limited by the two arc-shaped baffle plates 16 arranged on the inner wall of the valve cavity 12, thereby ensuring the communication between the flow channels and the inlets and outlets, and ensuring the reliability of the five-way valve.

In some embodiments, a plurality of metal sleeves 144 are arranged in the base 141 to bear the downward locking force of bolts during a mounting process to prevent the downward locking force from concentrating on the valve body 14 and causing excessive force on the base 141 or cylinder 142 of the valve body 14, resulting in cracking. The main body portion 10 further includes a flat washer 19, the flat washer is in sealed connection with the base 141, and thus, external connecting pipes connected with flow channel openings at the positions of six flow channel openings are sealed.

In some embodiments, the main body portion 10 further includes a valve cover 17 and a sealing ring 18, the valve cover 17 is in sealed connection with the valve body 14, the valve cover 17 blocks an opening of the valve cavity 12, the sealing ring 18 is arranged in a groove of the valve cover 17, the five-way valve further includes a rotating shaft 50, a portion of the rotating shaft 50 is fixed in the valve core 20, the rotating shaft 50 passes through the sealing ring 18, and an output shaft of the single-motor actuator 30 is in driving connection with the rotating shaft 50. By this arrangement, the sealing between the valve body 14 and the valve cover 17 is achieved by the sealing ring 18 to prevent the fluid in the valve body 14 from flowing out from the valve cover 17, thereby improving the sealing performance of the five-way valve.

In some embodiments, the rotating shaft 50 penetrates into the shaft sleeve 271, the rotating shaft 50 is made of a metal material, and the valve core 20 is made of plastic.

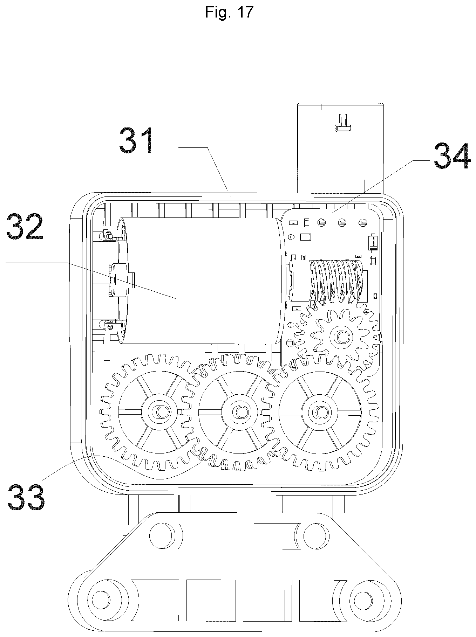

As shown in Fig. 17, in some embodiments, the single-motor actuator 30 includes a housing 31 and a motor 32, a gear assembly 33, and a control plate 34 which are arranged in the housing 31, the motor 32 is in driving connection with an input shaft of the gear assembly 33, an output shaft of the gear assembly 33 is in driving connection with the valve core 20, and the housing 31 is fixedly connected with the main body portion 10. By this arrangement, a control device is combined with a driving device to form the single-motor actuator 30, thereby reducing the processing and manufacturing cost of the five-way valve. Furthermore, the single-motor actuator 30 drives the valve core 20 to rotate mainly through the gear assembly 33, the structure is simple, and the transmission is reliable.

**Claims**

1. A five-way valve, comprising:

   a main body portion (10), the main body portion (10) having a valve cavity (12), a first inlet (113), a second inlet (114), a first outlet (112), a second outlet (111), a third outlet (115), and a fourth outlet (116);
   a valve core (20) rotatably arranged in the valve cavity (12), the valve core (20) having a first cavity (21), a second cavity (22), a third cavity (23), and a fourth cavity (24) which are separated; and
   a single-motor actuator (30), the single-motor actuator (30) being in driving connection with the valve core (20), **characterised in that** the five-way valve can be switched to any one of following working conditions by means of rotation of the valve core (20):
   a first working condition: the first inlet (113) is communicated with the first outlet (112) through the first cavity (21), the second inlet (114) is communicated with the third outlet (115) through the third cavity (23), and the second outlet (111) and the fourth outlet (116) are disconnected;

a second working condition: the first inlet (113) is communicated with the first outlet (112) through the first cavity (21), the second inlet (114) is communicated with both the third outlet (115) and the fourth outlet (116) through the third cavity (23), and the second outlet (111) is disconnected;

a third working condition: the first inlet (113) is communicated with the first outlet (112) through the first cavity (21), the second inlet (114) is communicated with the fourth outlet (116) through the third cavity (23), and both the third outlet (115) and the second outlet (111) are disconnected;

a fourth working condition: the second inlet (114) is communicated with the second outlet (111) through the second cavity (22), the first inlet (113) is communicated with the third outlet (115) through the fourth cavity (24), and both the first outlet (112) and the fourth outlet (116) are disconnected;

a fifth working condition: the second inlet (114) is communicated with the second outlet (111) through the second cavity (22), the first inlet (113) is communicated with both the third outlet (115) and the fourth outlet (116) through the fourth cavity (24), and the first outlet (112) is disconnected; and

a sixth working condition: the second inlet (114) is communicated with the second outlet (111) through the second cavity (22), the first inlet (113) is communicated with the fourth outlet (116) through the fourth cavity (24), and the first outlet (112) and the third outlet (115) are disconnected;

wherein

in the second working condition, the single-motor actuator (30) is configured to drive the valve core (20) to rotate and maintain at multiple different positions to adjust a proportion of fluids output from the third outlet (115) and the fourth outlet (116); and

in the fifth working condition, the single-motor actuator (30) is configured to drive the valve core (20) to rotate and maintain at multiple different positions to adjust a proportion of fluids output from the third outlet (115) and the fourth outlet (116).

2. The five-way valve as claimed in claim 1, wherein

the valve core (20) comprises a first axial region (251), a second axial region (252), and a third axial region (253) which are sequentially arranged in an axial direction, and openings of the first cavity (21), the second cavity (22), the third cavity (23), and the fourth cavity (24) all face an inner wall of the valve cavity (12); and the first cavity (21) comprises a first-first main cavity (211) and a first-second main cavity (212) which are communicated with each other, the third cavity (23) comprises a third-first main cavity (231) and a third-second main cavity (232) which are communicated with each other, the second cavity (22) comprises a second-first main cavity (221) and a second-second main cavity (222) which are communicated with each other, and the fourth cavity (24) comprises a fourth-first main cavity (241) and a fourth-second main cavity (242) which are communicated with each other,

wherein the first-first main cavity (211) and the second-first main cavity (221) are both located in the first axial region (251), the first-second main cavity (212), the third-first main cavity (231), the fourth-first main cavity (241), and the second-second main cavity (222) are all located in the second axial region (252), and the third-second main cavity (232) and the fourth-second main cavity (242) are both arranged in the third axial region (253).

3. The five-way valve as claimed in claim 2, wherein the valve core (20) comprises a first fan-shaped region (261), a second fan-shaped region (262), a third fan-shaped region (263), a fourth fan-shaped region (264), a fifth fan-shaped region (265), a sixth fan-shaped region (266), a seventh fan-shaped region (267), and an eighth fan-shaped region (268) which are sequentially arranged in a circumferential direction, wherein

the first-first main cavity (211) is distributed in the first fan-shaped region (261) and the second fan-shaped region (262), the first-second main cavity (212) is distributed in the first fan-shaped region (261) and the second fan-shaped region (262), the third-first main cavity (231) is distributed in the third fan-shaped region (263) and the fourth fan-shaped region (264), the third-second main cavity (232) is distributed in the second fan-shaped region (262) and the third fan-shaped region (263), the second-first main cavity (221) is distributed in the seventh fan-shaped region (267) and the eighth fan-shaped region (268), the second-second main cavity (222) is distributed in the seventh fan-shaped region (267) and the eighth fan-shaped region (268), the fourth-first main cavity (241) is distributed in the fifth fan-shaped region (265) and the sixth fan-shaped region (266), and the fourth-second main cavity (242) is distributed in the sixth fan-shaped region (266) and the seventh fan-shaped region (267).

4. The five-way valve as claimed in claim 3, wherein in the axial direction of the valve core (20), lengths of the first axial region (251), the second axial region (252), and the third axial region (253) are equal; and in the circumferential direction of the valve core (20), radians of the first fan-shaped region (261), the second fan-shaped region (262), the third fan-shaped region (263), the fourth fan-shaped region (264), the fifth fan-shaped region (265), the sixth fan-shaped region (266), the seventh fan-shaped region (267), and the eighth fan-shaped region (268) are equal.

5. The five-way valve as claimed in claim 2, wherein in a circumferential direction of the valve core (20), opening angles of the third outlet (115) and the fourth outlet (116) are both H1, a spacing angle between the third outlet (115) and the fourth outlet (116) is H2, and opening angles of the third-second main cavity (232) and the fourth-second main cavity (242) are both H3, wherein

$$H1<H2<H3.$$

6. The five-way valve as claimed in claim 2, wherein the valve core (20) comprises a shaft sleeve (271), two circular end plates (272), a plurality of axial partition plates (273), and a plurality of fan-shaped partition plates (274), the two circular end plates (272) are arranged in parallel and are both fixedly connected with the shaft sleeve (271), and the two circular end plates (272) and the shaft sleeve (271) are both coaxially arranged, wherein the plurality of axial partition plates (273) and the plurality of fan-shaped partition plates (274) are distributed in a space between the two circular end plates (272) to divide the space between the two circular end plates (272) into the first cavity (21), the second cavity (22), the third cavity (23), and the fourth cavity (24), and the single-motor actuator (30) is in driving connection with the shaft sleeve (271).

7. The five-way valve as claimed in claim 6, wherein

each of the plurality of axial partition plates (273) and each of the plurality of fan-shaped partition plates (274) are both connected with the shaft sleeve (271), and the each of the plurality of fan-shaped partition plates (274) is connected with at least two axial partition plates (273) in the plurality of axial partition plates; the third-second main cavity (232) comprises a first sub-cavity (C2) and a second sub-cavity (C3) which are communicated with each other, the fourth-second main cavity (242) comprises a third sub-cavity (C6) and a fourth sub-cavity (C7) which are communicated with each other, and the valve core (20) further comprises a first arc-shaped plate (281) and a second arc-shaped plate (282); in a circumferential direction of the valve core (20), the first arc-shaped plate (281), the first sub-cavity (C2), the second sub-cavity (C3), the second arc-shaped plate (282), the third sub-cavity (C6), and the fourth sub-cavity (C7) are sequentially arranged;
in the first working condition, the first sub-cavity (C2) is connected to the third outlet (115), and the second arc-shaped plate (282) blocks the fourth outlet (116);
in the third working condition, the second sub-cavity (C3) is connected to the fourth outlet (116), and the first arc-shaped plate (281) blocks the third outlet (115);
in the fourth working condition, the third sub-cavity (C6) is connected to the third outlet (115), and the first arc-shaped plate (281) blocks the fourth outlet (116); and
in the sixth working condition, the fourth sub-cavity (C7) is connected to the fourth outlet (116), and the second arc-shaped plate (282) blocks the third outlet (115).

8. The five-way valve as claimed in claim 1, wherein a bottom wall of the valve cavity (12) is provided with an arc-shaped groove (13), the arc-shaped groove (13) is arranged around an axis of the valve core (20), the five-way valve further comprises a limiting block (40), the limiting block (40) is located on a side of the valve core (20) facing the bottom wall of the valve cavity (12), and the limiting block (40) is located in the arc-shaped groove (13).

9. The five-way valve as claimed in claim 8, wherein the arc-shaped groove (13) has a first arc-shaped wall, a second arc-shaped wall, a first end wall, and a second end wall, the limiting block (40) has a fan-shaped structure, and the limiting block (40) has a third arc-shaped wall, a fourth arc-shaped wall, a third end wall, and a fourth end wall, wherein the first arc-shaped wall is matched with the third arc-shaped wall, the second arc-shaped wall is matched with the fourth arc-shaped wall, the first end wall is in stop fit with the third end wall, and the second end wall is in stop fit with the fourth end wall.

10. The five-way valve as claimed in claim 9, wherein

the valve core (20) has a first setting position and a second setting position; in a case that the valve core (20) is located in the first setting position, the five-way valve is in the first working condition, and the first end wall is separated from the third end wall; in a case that the valve core (20) is located in the second setting position, the five-way valve is in the sixth working condition, and the second end wall is separated from the fourth end wall; and

in a case that the five-way valve is switched from the first working condition to the sixth working condition along a rotation direction, a rotation angle of the valve core (20) is N, and a range of a rotation angle of the limiting block (40) in the arc-shaped groove (13) is greater than N.

11. The five-way valve as claimed in claim 1, wherein the valve core (20) has a first setting position; in a case that the valve core (20) is located in the first setting position, the five-way valve is in the first working condition, and the valve core (20) has a reserved rotation angle M; in a case that the valve core (20) rotates in a range of the rotation angle M along a rotation direction from the first setting position, the five-way valve is maintained in the first working condition; and in a case that the valve core (20) rotates in a range greater than the rotation angle M along the rotation direction from the first setting position, the five-way valve is switched to other working conditions.

12. The five-way valve as claimed in any one of claims 1 to 11, wherein

the main body portion (10) comprises a valve body (14) and a sealing gasket (15), the valve body (14) has the valve cavity (12), the sealing gasket (15) is arranged in the valve cavity (12), and the first inlet (113), the second inlet (114), the first outlet (112), the second outlet (111), the third outlet (115), and the fourth outlet (116) are all arranged in the sealing gasket (15); and the first outlet (112), the first inlet (113), and the third outlet (115) are arranged along an axial direction of the valve core (20), the second outlet (111), the second inlet (114), and the fourth outlet (116) are arranged along the axial direction of the valve core (20), the first outlet (112) and the second outlet (111) are arranged along a circumferential direction of the valve core (20), the first inlet (113) and the second inlet (114) are arranged along the circumferential direction of the valve core (20), and the third outlet (115) and the fourth outlet (116) are arranged along the circumferential direction of the valve core (20).

13. The five-way valve as claimed in claim 12, wherein the sealing gasket (15) has an arc-shaped structure, an outer side of the sealing gasket (15) is attached to an inner wall of the valve cavity (12), an inner side of the sealing gasket (15) is attached to an outer circumferential surface of the valve core (20), the main body portion (10) further comprises two arc-shaped baffle plates (16) arranged on the inner wall of the valve cavity (12), and the two arc-shaped baffle plates (16) respectively abut against two ends of the sealing gasket (15) in a circumferential direction; and on a side of the sealing gasket (15) facing the inner wall of the valve cavity (12), the sealing gasket (15) is distributed with a plurality of sealing ribs in the axial direction and the circumferential direction.

14. The five-way valve as claimed in claim 12, wherein the valve body (14) comprises a base (141), a cylinder (142), and a plurality of reinforcing ribs (143), the cylinder (142) is connected with the base (141), each of the plurality of reinforcing ribs (143) is connected with both the base (141) and an outer wall of the cylinder (142), the cylinder (142) has the valve cavity (12), the base (141) has six flow channels, and the six flow channels are respectively communicated with the first inlet (113), the second inlet (114), the first outlet (112), the second outlet (111), the third outlet (115), and the fourth outlet (116).

**Patentansprüche**

1. Ein Fünf-Wege-Ventil, bestehend aus:

einem Hauptkörperabschnitt (10), wobei der Hauptkörperabschnitt (10) einen Ventilhohlraum (12), einen ersten Einlass (113), einen zweiten Einlass (114), einen ersten Auslass (112), einen zweiten Auslass (111), einen dritten Auslass (115) und einen vierten Auslass (116) aufweist;
einem Ventilkern (20), der drehbar in dem Ventilhohlraum (12) angeordnet ist, wobei der Ventilkern (20) einen ersten Hohlraum (21), einen zweiten Hohlraum (22), einen dritten Hohlraum (23) und einen vierten Hohlraum (24) aufweist, die voneinander getrennt sind; und
einem Einmotorantrieb (30), wobei der Einmotorantrieb (30) in Antriebsverbindung mit dem Ventilkern (20) steht, **dadurch gekennzeichnet, dass**
das Fünf-Wege-Ventil durch Drehen des Ventilkerns (20) in einen der folgenden Betriebszustände geschaltet werden kann:

einen ersten Betriebszustand: Der erste Einlass (113) ist über den ersten Hohlraum (21) mit dem ersten Auslass (112) verbunden, der zweite Einlass (114) ist über den dritten Hohlraum (23) mit dem dritten Auslass (115) verbunden, und der zweite Auslass (111) sowie der vierte Auslass (116) sind voneinander getrennt;
einen zweiten Betriebszustand: Der erste Einlass (113) ist über den ersten Hohlraum (21) mit dem ersten Auslass (112) verbunden, der zweite Einlass (114) ist über den dritten Hohlraum (23) sowohl mit dem dritten Auslass (115) als auch mit dem vierten Auslass (116) verbunden, und der zweite Auslass (111) ist getrennt;

einen dritten Betriebszustand: Der erste Einlass (113) ist über den ersten Hohlraum (21) mit dem ersten Auslass (112) verbunden, der zweite Einlass (114) ist über den dritten Hohlraum (23) mit dem vierten Auslass (116) verbunden, und sowohl der dritte Auslass (115) als auch der zweite Auslass (111) sind getrennt;

einen vierten Betriebszustand: Der zweite Einlass (114) ist über den zweiten Hohlraum (22) mit dem zweiten Auslass (111) verbunden, der erste Einlass (113) ist über den vierten Hohlraum (24) mit dem dritten Auslass (115) verbunden, und sowohl der erste Auslass (112) als auch der vierte Auslass (116) sind getrennt;

einen fünften Betriebszustand: Der zweite Einlass (114) ist über den zweiten Hohlraum (22) mit dem zweiten Auslass (111) verbunden, der erste Einlass (113) ist über den vierten Hohlraum (24) sowohl mit dem dritten Auslass (115) als auch mit dem vierten Auslass (116) verbunden, und der erste Auslass (112) ist getrennt; und

einen sechsten Betriebszustand: Der zweite Einlass (114) ist über den zweiten Hohlraum (22) mit dem zweiten Auslass (111) verbunden, der erste Einlass (113) ist über den vierten Hohlraum (24) mit dem vierten Auslass (116) verbunden, und der erste Auslass (112) sowie der dritte Auslass (115) sind getrennt;

wobei

im zweiten Betriebszustand der Einmotorantrieb (30) so konfiguriert ist, dass er den Ventilkern (20) antreibt, um ihn zu drehen und in mehreren verschiedenen Positionen zu halten, um einen Anteil der aus dem dritten Auslass (115) und dem vierten Auslass (116) ausgegebenen Flüssigkeiten einzustellen; und

im fünften Betriebszustand der Einmotorantrieb (30) so konfiguriert ist, dass er den Ventilkern (20) antreibt, um ihn zu drehen und in mehreren verschiedenen Positionen zu halten, um einen Anteil der aus dem dritten Auslass (115) und dem vierten Auslass (116) ausgegebenen Flüssigkeiten einzustellen.

2. Fünf-Wege-Ventil nach Anspruch 1, wobei

der Ventilkern (20) einen ersten axialen Bereich (251), einen zweiten axialen Bereich (252) und einen dritten axialen Bereich (253) umfasst, die nacheinander in axialer Richtung angeordnet sind, und Öffnungen des ersten Hohlraums (21), des zweiten Hohlraums (22), des dritten Hohlraums (23) und des vierten Hohlraums (24) alle einer Innenwand des Ventilhohlraums (12) zugewandt sind; und

der erste Hohlraum (21) einen ersten-ersten Haupthohlraum (211) und einen ersten-zweiten Haupthohlraum (212) umfasst, die miteinander in Verbindung stehen, der dritte Hohlraum (23) einen dritten-ersten Haupthohlraum (231) und einen dritten-zweiten Haupthohlraum (232) umfasst, die miteinander in Verbindung stehen, der zweite Hohlraum (22) einen zweiten-ersten Haupthohlraum (221) und einen zweitenzweiten Haupthohlraum (222) umfasst, die miteinander in Verbindung stehen, und der vierte Hohlraum (24) einen vierten-ersten Haupthohlraum (241) und einen vierten-zweiten Haupthohlraum (242) umfasst, die miteinander in Verbindung stehen, wobei sich der erste-erste Haupthohlraum (211) und der zweite-erste Haupthohlraum (221) beide im ersten axialen Bereich (251) befinden, der erste-zweite Haupthohlraum (212), der dritteerste Haupthohlraum (231), der vierte-erste Haupthohlraum (241) und der zweite-zweite Haupthohlraum (222) sich alle im zweiten axialen Bereich (252) befinden und der dritte-zweite Haupthohlraum (232) und der vierte-zweite Haupthohlraum (242) beide im dritten axialen Bereich (253) angeordnet sind.

3. Fünf-Wege-Ventil nach Anspruch 2, wobei der Ventilkern (20) einen ersten fächerförmigen Bereich (261), einen zweiten fächerförmigen Bereich (262), einen dritten fächerförmigen Bereich (263), einen vierten fächerförmigen Bereich (264), einen fünften fächerförmigen Bereich (265), einen sechsten fächerförmigen Bereich (266), einen siebten fächerförmigen Bereich (267) und einen achten fächerförmigen Bereich (268) umfasst, die in Umfangsrichtung nacheinander angeordnet sind, wobei der erste-erste Haupthohlraum (211) auf den ersten fächerförmigen Bereich (261) und den zweiten fächerförmigen Bereich (262) verteilt ist, der erstezweite Haupthohlraum (212) auf den ersten fächerförmigen Bereich (261) und den zweiten fächerförmigen Bereich (262) verteilt ist, der dritte-erste Haupthohlraum (231) auf den dritten fächerförmigen Bereich (263) und den vierten fächerförmigen Bereich (264) verteilt ist, der dritte-zweite Haupthohlraum (232) auf den zweiten fächerförmigen Bereich (262) und den dritten fächerförmigen Bereich (263) verteilt ist, der zweite-erste Haupthohlraum (221) auf den siebten fächerförmigen Bereich (267) und den achten fächerförmigen Bereich (268) verteilt ist, der zweite-zweite Haupthohlraum (222) auf den siebten fächerförmigen Bereich (267) und den achten fächerförmigen Bereich (268) verteilt ist, der vierte-erste Haupthohlraum (241) auf den fünften fächerförmigen Bereich (265) und den sechsten fächerförmigen Bereich (266) verteilt ist, und der vierte-zweite Haupthohlraum (242) auf den sechsten fächerförmigen Bereich (266) und den siebten fächerförmigen Bereich (267) verteilt ist.

4. Fünf-Wege-Ventil nach Anspruch 3, wobei in axialer Richtung des Ventilkerns (20) die Längen des ersten axialen Bereichs (251), des zweiten axialen Bereichs (252) und des dritten axialen Bereichs (253) gleich sind; und in Umfangsrichtung des Ventilkerns (20) die Bogenmaße des ersten fächerförmigen Bereichs (261), des zweiten fächerförmigen Bereichs (262), des dritten fächerförmigen Bereichs (263), des vierten fächerförmigen Bereichs (264), des fünften fächerförmigen Bereichs (265), des sechsten fächerförmigen Bereichs (266), des siebten fächerförmigen Bereichs (267) und des achten fächerförmigen Bereichs (268) gleich sind.

5. Fünf-Wege-Ventil nach Anspruch 2, wobei in Umfangsrichtung des Ventilkerns (20) die Öffnungswinkel des dritten Auslasses (115) und des vierten Auslasses (116) beide H1 betragen, ein Abstandswinkel zwischen dem dritten Auslass (115) und dem vierten Auslass (116) H2 beträgt und die Öffnungswinkel des dritten-zweiten Haupthohlraums (232) und des vierten-zweiten Haupthohlraums (242) beide H3 betragen, wobei

$$H1 < H2 < H3.$$

6. Fünf-Wege-Ventil nach Anspruch 2, wobei der Ventilkern (20) eine Wellenhülse (271), zwei kreisförmige Endplatten (272), eine Vielzahl von axialen Trennplatten (273) und eine Vielzahl von fächerförmigen Trennplatten (274) umfasst, die beiden kreisförmigen Endplatten (272) parallel angeordnet sind und beide fest mit der Wellenhülse (271) verbunden sind und die beiden kreisförmigen Endplatten (272) sowie die Wellenhülse (271) koaxial angeordnet sind, wobei die mehreren axialen Trennplatten (273) und die mehreren fächerförmigen Trennplatten (274) in einem Raum zwischen den beiden kreisförmigen Endplatten (272) verteilt sind, um den Raum zwischen den beiden kreisförmigen Endplatten (272) in den ersten Hohlraum (21), den zweiten Hohlraum (22), den dritten Hohlraum (23) und den vierten Hohlraum (24) zu unterteilen, und der Einmotorantrieb (30) in Antriebsverbindung mit der Wellenhülse (271) steht.

7. Fünf-Wege-Ventil nach Anspruch 6, wobei

jede der mehreren axialen Trennplatten (273) und jede der mehreren fächerförmigen Trennplatten (274) jeweils mit der Wellenhülse (271) verbunden ist, und jede der mehreren fächerförmigen Trennplatten (274) mit mindestens zwei axialen Trennplatten (273) aus der Vielzahl der axialen Trennplatten verbunden ist;

der dritte-zweite Haupthohlraum (232) einen ersten Teilhohlraum (C2) und einen zweiten Teilhohlraum (C3) umfasst, die miteinander in Verbindung stehen, der vierte-zweite Haupthohlraum (242) einen dritten Teilhohlraum (C6) und einen vierten Teilhohlraum (C7) umfasst, die miteinander in Verbindung stehen, und der Ventilkern (20) ferner eine erste bogenförmige Platte (281) und eine zweite bogenförmige Platte (282) umfasst; und in Umfangsrichtung des Ventilkerns (20) die erste bogenförmige Platte (281), der erste Teilhohlraum (C2), der zweite Teilhohlraum (C3), die zweite bogenförmige Platte (282), der dritte Teilhohlraum (C6) und der vierte Teilhohlraum (C7) nacheinander angeordnet sind;

im ersten Betriebszustand der erste Teilhohlraum (C2) mit dem dritten Auslass (115) verbunden ist und die zweite bogenförmige Platte (282) den vierten Auslass (116) verschließt; im dritten Betriebszustand der zweite Teilhohlraum (C3) mit dem vierten Auslass (116) verbunden ist und die erste bogenförmige Platte (281) den dritten Auslass (115) verschließt; im vierten Betriebszustand der dritte Teilhohlraum (C6) mit dem dritten Auslass (115) verbunden ist und die erste bogenförmige Platte (281) den vierten Auslass (116) verschließt; und im sechsten Betriebszustand der vierte Teilhohlraum (C7) mit dem vierten Auslass (116) verbunden ist und die zweite bogenförmige Platte (282) den dritten Auslass (115) verschließt.

8. Fünf-Wege-Ventil nach Anspruch 1, wobei eine Bodenwand des Ventilhohlraums (12) mit einer bogenförmigen Nut (13) versehen ist, die bogenförmige Nut (13) um eine Achse des Ventilkerns (20) angeordnet ist, das Fünf-Wege-Ventil ferner einen Begrenzungsblock (40) umfasst, der Begrenzungsblock (40) an einer der Bodenwand des Ventilhohlraums (12) zugewandten Seite des Ventilkerns (20) angeordnet ist und der Begrenzungsblock (40) in der bogenförmigen Nut (13) angeordnet ist.

9. Fünf-Wege-Ventil nach Anspruch 8, wobei die bogenförmige Nut (13) eine erste bogenförmige Wand, eine zweite bogenförmige Wand, eine erste Stirnwand und eine zweite Stirnwand aufweist, der Begrenzungsblock (40) eine fächerförmige Struktur aufweist und der Begrenzungsblock (40) eine dritte bogenförmige Wand, eine vierte bogenförmige Wand, eine dritte Stirnwand und eine vierte Stirnwand aufweist, wobei die erste bogenförmige Wand mit der dritten bogenförmigen Wand zusammenpasst, die zweite bogenförmige Wand mit der vierten bogenförmigen Wand zusammenpasst, die erste Stirnwand in Anschlagpassung mit der dritten Stirnwand steht und die zweite Stirnwand in Anschlagpassung mit der vierten Stirnwand steht.

10. Fünf-Wege-Ventil nach Anspruch 9, wobei

der Ventilkern (20) eine erste Einstellposition und eine zweite Einstellposition aufweist; wenn sich der Ventilkern (20) in der ersten Einstellposition befindet, sich das Fünf-Wege-Ventil im ersten Betriebszustand befindet und die erste Stirnwand von der dritten Stirnwand getrennt ist; wenn sich der Ventilkern (20) in der zweiten Einstellposition befindet, sich das Fünf-Wege-Ventil im sechsten Betriebszustand befindet und die zweite Stirnwand von der vierten Stirnwand getrennt ist; und
wenn das Fünf-Wege-Ventil entlang einer Drehrichtung vom ersten Betriebszustand in den sechsten Betriebszustand umgeschaltet wird, der Drehwinkel des Ventilkerns (20) N beträgt und der Drehwinkelbereich des Begrenzungsblocks (40) in der bogenförmigen Nut (13) größer als N ist.

11. Fünf-Wege-Ventil nach Anspruch 1, wobei der Ventilkern (20) eine erste Einstellposition aufweist; wenn sich der Ventilkern (20) in der ersten Einstellposition befindet, befindet sich das Fünf-Wege-Ventil im ersten Betriebszustand, und der Ventilkern (20) weist einen reservierten Drehwinkel M auf; wenn sich der Ventilkern (20) in einem Bereich des Drehwinkels M entlang einer Drehrichtung von der ersten Einstellposition aus dreht, wird das Fünf-Wege-Ventil im ersten Betriebszustand gehalten; und wenn sich der Ventilkern (20) in einem Bereich, der größer ist als der Drehwinkel M, entlang der Drehrichtung von der ersten Einstellposition aus dreht, wird das Fünf-Wege-Ventil in andere Betriebszustände umgeschaltet.

12. Fünf-Wege-Ventil nach einem der Ansprüche 1 bis 11, wobei

der Hauptkörperabschnitt (10) einen Ventilkörper (14) und eine Dichtungsmanschette (15) umfasst, der Ventilkörper (14) den Ventilhohlraum (12) aufweist, die Dichtungsmanschette (15) in dem Ventilhohlraum (12) angeordnet ist und der erste Einlass (113), der zweite Einlass (114), der erste Auslass (112), der zweite Auslass (111), der dritte Auslass (115) und der vierte Auslass (116) alle in der Dichtungsmanschette (15) angeordnet sind; und
der erste Auslass (112), der erste Einlass (113) und der dritte Auslass (115) entlang einer axialen Richtung des Ventilkerns (20) angeordnet sind, der zweite Auslass (111), der zweite Einlass (114) und der vierte Auslass (116) entlang der axialen Richtung des Ventilkerns (20) angeordnet sind, der erste Auslass (112) und der zweite Auslass (111) entlang einer Umfangsrichtung des Ventilkerns (20) angeordnet sind, der erste Einlass (113) und der zweite Einlass (114) entlang der Umfangsrichtung des Ventilkerns (20) angeordnet sind, und der dritte Auslass (115) und der vierte Auslass (116) entlang der Umfangsrichtung des Ventilkerns (20) angeordnet sind.

13. Fünf-Wege-Ventil nach Anspruch 12, wobei die Dichtungsmanschette (15) eine bogenförmige Struktur aufweist, eine Außenseite der Dichtungsmanschette (15) an einer Innenwand des Ventilhohlraums (12) befestigt ist, eine Innenseite der Dichtungsmanschette (15) an einer äußeren Umfangsfläche des Ventilkerns (20) befestigt ist, der Hauptkörperabschnitt (10) ferner zwei bogenförmige Leitbleche (16) umfasst, die an der Innenwand des Ventilhohlraums (12) angeordnet sind, und die beiden bogenförmigen Leitbleche (16) jeweils in Umfangsrichtung an zwei Enden der Dichtungsmanschette (15) anliegen; und auf einer der Innenwand des Ventilhohlraums (12) zugewandten Seite der Dichtungsmanschette (15) die Dichtungsmanschette (15) mit einer Vielzahl von Dichtungsrippen in axialer Richtung und in Umfangsrichtung verteilt ist.

14. Fünf-Wege-Ventil nach Anspruch 12, wobei der Ventilkörper (14) einen Sockel (141), einen Zylinder (142) und eine Vielzahl von Verstärkungsrippen (143) umfasst, der Zylinder (142) mit dem Sockel (141) verbunden ist, jede der mehreren Verstärkungsrippen (143) sowohl mit dem Sockel (141) als auch mit einer Außenwand des Zylinders (142) verbunden ist, der Zylinder (142) den Ventilhohlraum (12) aufweist, der Sockel (141) sechs Strömungskanäle aufweist, und die sechs Strömungskanäle jeweils mit dem ersten Einlass (113), dem zweiten Einlass (114), dem ersten Auslass (112), dem zweiten Auslass (111), dem dritten Auslass (115) und dem vierten Auslass (116) in Verbindung stehen.

**Revendications**

1. Soupape à cinq voies, comprenant :

une partie de corps principal (10), la partie de corps principal (10) ayant une cavité de soupape (12), une première entrée (113), une deuxième entrée (114), une première sortie (112), une deuxième sortie (111), une troisième sortie (115) et une quatrième sortie (116) ;

un noyau de soupape (20) agencé de manière rotative dans la cavité de soupape (12), le noyau de soupape (20) ayant une première cavité (21), une deuxième cavité (22), une troisième cavité (23) et une quatrième cavité (24) qui sont séparées ; et

un actionneur à moteur unique (30), l'actionneur à moteur unique (30) étant en connexion d'entraînement avec le noyau de soupape (20), **caractérisée en ce que**

la soupape à cinq voies peut passer à l'un quelconque des états de fonctionnement suivants au moyen d'une rotation du noyau de soupape (20) :

un premier état de fonctionnement : la première entrée (113) communique avec la première sortie (112) par l'intermédiaire de la première cavité (21), la deuxième entrée (114) communique avec la troisième sortie (115) par l'intermédiaire de la troisième cavité (23), et la deuxième sortie (111) et la quatrième sortie (116) sont déconnectées ;

un deuxième état de fonctionnement : la première entrée (113) communique avec la première sortie (112) par l'intermédiaire de la première cavité (21), la deuxième entrée (114) communique à la fois avec la troisième sortie (115) et la quatrième sortie (116) par l'intermédiaire de la troisième cavité (23), et la deuxième sortie (111) est déconnectée ;

un troisième état de fonctionnement : la première entrée (113) communique avec la première sortie (112) par l'intermédiaire de la première cavité (21), la deuxième entrée (114) communique avec la quatrième sortie (116) par l'intermédiaire de la troisième cavité (23), et la troisième sortie (115) et la deuxième sortie (111) sont toutes deux déconnectées ;

un quatrième état de fonctionnement : la deuxième entrée (114) communique avec la deuxième sortie (111) par l'intermédiaire de la deuxième cavité (22), la première entrée (113) communique avec la troisième sortie (115) par l'intermédiaire de la quatrième cavité (24), et la première sortie (112) et la quatrième sortie (116) sont toutes deux déconnectées ;

un cinquième état de fonctionnement : la deuxième entrée (114) communique avec la deuxième sortie (111) par l'intermédiaire de la deuxième cavité (22), la première entrée (113) communique à la fois avec la troisième sortie (115) et la quatrième sortie (116) par l'intermédiaire de la quatrième cavité (24), et la première sortie (112) est déconnectée ; et

un sixième état de fonctionnement : la deuxième entrée (114) communique avec la deuxième sortie (111) par l'intermédiaire de la deuxième cavité (22), la première entrée (113) communique avec la quatrième sortie (116) par l'intermédiaire de la quatrième cavité (24), et la première sortie (112) et la troisième sortie (115) sont déconnectées ;

dans laquelle

dans le deuxième état de fonctionnement, l'actionneur à moteur unique (30) est configuré pour entraîner le noyau de soupape (20) à tourner et à se maintenir dans de multiples positions différentes pour ajuster un proportion de fluides sortant de la troisième sortie (115) et la quatrième sortie (116) ; et

dans le cinquième état de fonctionnement, l'actionneur à moteur unique (30) est configuré pour entraîner le noyau de soupape (20) à tourner et à se maintenir dans de multiples positions différentes pour ajuster un proportion de fluides sortant de la troisième sortie (115) et la quatrième sortie (116).

2. Soupape à cinq voies selon la revendication 1, dans laquelle

le noyau de soupape (20) comprend une première région axiale (251), une deuxième région axiale (252) et une troisième région axiale (253) qui sont agencées séquentiellement dans une direction axiale, et des ouvertures de la première cavité (21), de la deuxième cavité (22), de la troisième cavité (23) et de la quatrième cavité (24) sont toutes orientées vers une paroi intérieure de la cavité de soupape (12) ; et

la première cavité (21) comprend une première-première cavité principale (211) et une deuxième-première cavité principale (212) qui communiquent entre elles, la troisième cavité (23) comprend une première-troisième cavité principale (231) et une deuxième-troisième cavité principale (232) qui communiquent entre elles, la deuxième cavité (22) comprend une première-deuxième cavité principale (221) et une deuxième-deuxième cavité principale (222) qui communiquent entre elles, et la quatrième cavité (24) comprend une première-quatrième cavité principale (241) et une deuxième-quatrième cavité principale (242) qui communiquent entre elles,

dans laquelle la première-première cavité principale (211) et la première-deuxième cavité principale (221) sont toutes deux situées dans la première région axiale (251), la deuxième-première cavité principale (212), la première-troisième cavité principale (231), la première-quatrième cavité principale (241) et la deuxième-deuxième cavité principale (222) sont toutes situées dans la deuxième région axiale (252), et la deuxième-troisième cavité principale (232) et la deuxième-quatrième cavité principale (242) sont toutes deux agencées dans la troisième région axiale (253).

3. Soupape à cinq voies selon la revendication 2, dans laquelle le noyau de soupape (20) comprend une première région en forme d'éventail (261), une deuxième région en forme d'éventail (262), une troisième région en forme d'éventail (263), une quatrième région en forme d'éventail (264), une cinquième région en forme d'éventail (265), une sixième région en forme d'éventail (266), une septième région en forme d'éventail (267) et une huitième région en forme d'éventail (268) qui sont agencées séquentiellement dans une direction circonférentielle, dans laquelle

la première-première cavité principale (211) est répartie dans la première région en forme d'éventail (261) et la deuxième région en forme d'éventail (262), la deuxième-première cavité principale (212) est répartie dans la première région en forme d'éventail (261) et la deuxième région en forme d'éventail (262), la première-troisième cavité principale (231) est répartie dans la troisième région en forme d'éventail (263) et la quatrième région en forme d'éventail (264), la deuxième-troisième cavité principale (232) est répartie dans la deuxième région en forme d'éventail (262) et la troisième région en forme d'éventail (263), la première-deuxième cavité principale (221) est répartie dans la septième région en forme d'éventail (267) et la huitième région en forme d'éventail (268), la deuxième-deuxième cavité principale (222) est répartie dans la septième région en forme d'éventail (267) et la huitième région en forme d'éventail (268), la première-quatrième cavité principale (241) est répartie dans la cinquième région en forme d'éventail (265) et la sixième région en forme d'éventail (266), et la deuxième-quatrième cavité principale (242) est répartie dans la sixième région en forme d'éventail (266) et la septième région en forme d'éventail (267).

4. Soupape à cinq voies selon la revendication 3, dans laquelle dans la direction axiale du noyau de soupape (20), les longueurs de la première région axiale (251), de la deuxième région axiale (252) et de la troisième région axiale (253) sont égales ; et dans la direction circonférentielle du noyau de soupape (20), les radians de la première région en forme d'éventail (261), de la deuxième région en forme d'éventail (262), de la troisième région en forme d'éventail (263), de la quatrième région en forme d'éventail (264), de la cinquième région en forme d'éventail (265), de la sixième région en forme d'éventail (266), de la septième région en forme d'éventail (267) et de la huitième région en forme d'éventail (268) sont égaux.

5. Soupape à cinq voies selon la revendication 2, dans laquelle dans une direction circonférentielle du noyau de soupape (20), des angles d'ouverture de la troisième sortie (115) et de la quatrième sortie (116) sont tous deux H1, un angle d'espacement entre la troisième sortie (115) et la quatrième sortie (116) est H2, et des angles d'ouverture de la troisième-deuxième cavité principale (232) et de la deuxième-quatrième cavité principale (242) sont tous deux H3, où

$$H1 < H2 < H3.$$

6. Soupape à cinq voies selon la revendication 2, dans laquelle le noyau de soupape (20) comprend un manchon d'arbre (271), deux plaques d'extrémité circulaires (272), une pluralité de plaques de séparation axiales (273) et une pluralité de plaques de séparation en forme d'éventail (274), la deux plaques d'extrémité circulaires (272) sont agencées en parallèle et sont toutes deux connectées manière fixe avec le manchon d'arbre (271), et les deux plaques d'extrémité circulaires (272) et le manchon d'arbre (271) sont tous deux agencés co-axialement, dans laquelle la pluralité de plaques de séparation axiales (273) et la pluralité de plaques de séparation (274) sont réparties dans un espace entre les deux plaques d'extrémité en forme d'éventail circulaires (272) pour diviser l'espace entre les deux plaques d'extrémité circulaires (272) en la première cavité (21), la deuxième cavité (22), la troisième cavité (23) et la quatrième cavité (24), et l'actionneur à moteur unique (30) est en connexion d'entraînement avec le manchon d'arbre (271).

7. Soupape à cinq voies selon la revendication 6, dans laquelle

chacune de la pluralité de plaques de séparation axiales (273) et chacune de la pluralité de plaques de séparation en forme d'éventail (274) sont toutes deux connectées avec la manchon d'arbre (271), et la chacune de la pluralité de plaques de séparation en forme d'éventail (274) est connectée avec au moins deux plaques de séparation axiales (273) dans la pluralité de plaques de séparation axiales ;

la deuxième-troisième cavité principale (232) comprend une première sous-cavité (C2) et une deuxième sous-cavité (C3) qui communiquent entre elles, la deuxième-quatrième cavité principale (242) comprend une troisième sous-cavité (C6) et une quatrième sous-cavité (C7) qui communiquent entre elles, et le noyau de soupape (20) comprend en outre une première plaque en forme d'arc (281) et une deuxième plaque en forme d'arc (282) ; dans une direction circonférentielle du noyau de soupape (20), la première plaque en forme d'arc (281), la première sous-cavité (C2), la deuxième sous-cavité (C3), la deuxième plaque en forme d'arc (282), la troisième sous-cavité (C6) et la quatrième sous-cavité (C7) sont agencées séquentiellement ;

dans le premier état de fonctionnement, la première sous-cavité (C2) est connectée à la troisième sortie (115), et la deuxième plaque en forme d'arc (282) bloque la quatrième sortie (116) ;

dans le troisième état de fonctionnement, la deuxième sous-cavité (C3) est connectée à la quatrième sortie (116), et la première plaque en forme d'arc (281) bloque la troisième sortie (115) ;

dans le quatrième état de fonctionnement, la troisième sous-cavité (C6) est connectée à la troisième sortie (115), et la première plaque en forme d'arc (281) bloque la quatrième sortie (116) ; et

dans le sixième état de fonctionnement, la quatrième sous-cavité (C7) est connectée à la quatrième sortie (116), et la deuxième plaque en forme d'arc (282) bloque la troisième sortie (115).

8. Soupape à cinq voies selon la revendication 1, dans laquelle une paroi de dessous de la cavité de soupape (12) est pourvue d'une rainure en forme d'arc (13), la rainure en forme d'arc (13) est agencée autour d'un axe du noyau de soupape (20), la soupape à cinq voies comprend en outre un bloc de limitation (40), le bloc de limitation (40) est situé sur un côté du noyau de soupape (20) faisant face à la paroi de dessous de la cavité de soupape (12), et le bloc de limitation (40) est situé dans la rainure en forme d'arc (13).

9. Soupape à cinq voies selon la revendication 8, dans laquelle la rainure en forme d'arc (13) a une première paroi en forme d'arc, une deuxième paroi en forme d'arc, une première paroi d'extrémité et une deuxième paroi d'extrémité, le bloc de limitation (40) a une structure en forme d'éventail, et le bloc de limitation (40) a une troisième paroi en forme d'arc, une quatrième paroi en forme d'arc, une troisième paroi d'extrémité, et une quatrième paroi d'extrémité, dans laquelle la première paroi en forme d'arc est appariée avec la troisième paroi en forme d'arc, la deuxième paroi en forme d'arc est appariée avec la quatrième paroi en forme d'arc, la première paroi d'extrémité est en ajustement d'arrêt avec la troisième paroi d'extrémité, et la deuxième paroi d'extrémité est en ajustement d'arrêt avec la quatrième paroi d'extrémité.

10. Soupape à cinq voies selon la revendication 9, dans laquelle

le noyau de soupape (20) a une première position de réglage et une deuxième position de réglage ; dans le cas où le noyau de soupape (20) est situé dans la première position de réglage, la soupape à cinq voies est dans le premier état de fonctionnement, et la première paroi d'extrémité est séparée de la troisième paroi d'extrémité ; dans le cas où le noyau de soupape (20) est situé dans la deuxième position de réglage, la soupape à cinq voies est dans le sixième état de fonctionnement, et la deuxième paroi d'extrémité est séparée de la quatrième paroi d'extrémité ; et

dans le cas où la soupape à cinq voies passe du premier état de fonctionnement au sixième état de fonctionnement selon une direction de rotation, un angle de rotation du noyau de soupape (20) est N, et une plage d'un angle de rotation du bloc de limitation (40) dans la rainure en forme d'arc (13) est supérieure à N.

11. Soupape à cinq voies selon la revendication 1, dans laquelle le noyau de soupape (20) a une première position de réglage ; dans le cas où le noyau de soupape (20) est situé dans la première position de réglage, la soupape à cinq voies est dans le premier état de fonctionnement, et le noyau de soupape (20) a un angle de rotation M réservé ; dans le cas où le noyau de soupape (20) tourne dans une plage de l'angle de rotation M selon une direction de rotation à partir de la première position de réglage, la soupape à cinq voies est maintenue dans le premier état de fonctionnement ; et dans le cas où le noyau de soupape (20) tourne dans une plage supérieure à l'angle de rotation M selon la direction de rotation à partir de la première position de réglage, la soupape à cinq voies passe à d'autres états de fonctionnement.

12. Soupape à cinq voies selon l'une quelconque des revendications 1 à 11, dans laquelle

la partie de corps principal (10) comprend un corps de soupape (14) et un joint d'étanchéité (15), le corps de soupape (14) a la cavité de soupape (12), le joint d'étanchéité (15) est agencé dans la cavité de soupape (12), et la première entrée (113), la deuxième entrée (114), la première sortie (112), la deuxième sortie (111), la troisième sortie (115) et la quatrième sortie (116) sont toutes agencées dans le joint d'étanchéité (15) ; et

la première sortie (112), la première entrée (113) et la troisième sortie (115) sont agencées selon une direction axiale du noyau de soupape (20), la deuxième sortie (111), la deuxième entrée (114) et la quatrième sortie (116) sont agencées selon la direction axiale du noyau de soupape (20), la première sortie (112) et la deuxième sortie (111) sont agencées selon une direction circonférentielle du noyau de soupape (20), la première entrée (113) et la deuxième entrée (114) sont agencées selon la direction circonférentielle du noyau de soupape (20), et la troisième sortie (115) et la quatrième sortie (116) sont agencées selon la direction circonférentielle du noyau de soupape (20).

13. Soupape à cinq voies selon la revendication 12, dans laquelle le joint d'étanchéité (15) a une structure en forme d'arc, un côté extérieur du joint d'étanchéité (15) est fixé à une paroi intérieure de la cavité de soupape (12), un côté intérieur du joint d'étanchéité (15) est fixé à une surface circonférentielle extérieure du noyau de soupape (20), la partie de corps principal (10) comprend en outre deux déflecteurs en forme d'arc (16) agencés sur la paroi intérieure de la cavité de soupape (12), et les deux déflecteurs en forme d'arc (16) viennent respectivement en butée contre deux extrémités du joint d'étanchéité (15) dans une direction circonférentielle ; et sur un côté de le joint d'étanchéité (15) faisant face à la paroi intérieure de la cavité de soupape (12), le joint d'étanchéité (15) est pourvu d'une pluralité de nervures d'étanchéité réparties dans la direction axiale et la direction circonférentielle.

14. Soupape à cinq voies selon la revendication 12, dans laquelle le corps de soupape (14) comprend une base (141), un cylindre (142) et une pluralité de nervures de renfort (143), le cylindre (142) est connecté à la base (141), chacune de la pluralité de nervures de renfort (143) est connectée à la fois à la base (141) et à une paroi extérieure du cylindre (142), le cylindre (142) a la cavité de soupape (12), la base (141) a six canaux d'écoulement, et les six canaux d'écoulement communiquent respectivement avec la première entrée (113), la deuxième entrée (114), la première sortie (112), la deuxième sortie (111), la troisième sortie (115) et la quatrième

sortie (116).

Fig. 1

30

10

Fig. 2

30

10

19

Fig. 3

14

142 143 141 144

17 50

15

18

20

Fig. 4

Fig. 5

Fig. 6

Fig. 7

Fig. 8

Fig. 9

Fig. 10

15

115 113 112 116 114 111

Fig. 11

12.5° 110° 12.5°

22.5° 22.5°

45° 45°

28° 28°

H1 H1

45°

H2

Fig. 12

EP 4 431 769 B1

Fig. 13

30

Fig. 14

Fig. 15

F-F

221

12.5°

A7

A8

211

A1

112

A2

111

Fig. 16

Fig. 17

**EP 4 431 769 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022093314 W
- CN 202111511104
- CN 202123098867X
- CN 111828682 A